# EUROPEAN PATENT APPLICATION

(11) **EP 4 539 558 A1**
(43) Date of publication of application: **16.04.2025**
(21) Application number: 23826558.1
(22) Date of filing: 21.06.2023
(51) Int. Cl.: H04W 52/02

(54) **POWER STATE DETERMINATION METHOD AND APPARATUS**

(30) Priority: 23.06.2022 CN 202210724843
(71) Applicant: Huawei Technologies Co., Ltd., Shenzhen, Guangdong 518129 (CN)
(72) Inventor: HUANG, Guogang, Shenzhen, Guangdong 518129 (CN); GUO, Yuchen, Shenzhen, Guangdong 518129 (CN); GAN, Ming, Shenzhen, Guangdong 518129 (CN); LI, Yunbo, Shenzhen, Guangdong 518129 (CN)
(74) Representative: Maiwald GmbH
(86) International application number: PCT/CN2023/101888
(87) International publication number: WO 2023/246913

(57) **Abstract**

This application provides a power state determining method and apparatus, to determine a power state of a first access point in a power save mode, to reduce power consumption of a transmit end and a receive end, and improve communication accuracy. In the method, an access point multi-link device determines a priority sequence of different operations when the first access point is in the power save mode, and determines the power state of the first access point. The operations include one or more of link disablement, an aperiodic wakeup request, and periodic target wakeup. This application is applied to a wireless local area network system that supports an IEEE 802.11ax next-generation Wi-Fi protocol, for example, 802. 11be, Wi-Fi 7, or EHT, for another example, an 802.11 series protocol such as a next generation of 802. 11be, Wi-Fi 8, or Wi-Fi AI, and may be further applied to an ultra-wideband UWB-based wireless personal area network system, and a sensing (sensing) system.

## Description

### CROSS-REFERENCE TO RELATED APPLICATIONS

This application claims priority to Chinese Patent Application No. 202210724843.0, filed with the China National Intellectual Property Administration on June 23, 2022 and entitled "POWER STATE DETERMINING METHOD AND APPARATUS", which is incorporated herein by reference in its entirety.

### TECHNICAL FIELD

This application relates to the field of communication technologies, and in particular, to a power state determining method and apparatus.

### BACKGROUND

With continuous development of wireless technologies, an access point (access point, AP) multi-link device (multi-link device, MLD) may be in a power save working state subsequently. For example, an access point may set one or more (not all) affiliated access points to be in a power save (power save, PS) mode (mode) based on a load condition. In the PS mode, the AP may switch between an awake (Awake) state and a doze (Doze) state. In the doze state, the AP is disabled, and cannot receive/send any frame. In the awake state, the AP may perform receiving/sending.

When the AP is in the power save mode, a plurality of operations may be simultaneously performed on the AP, and the plurality of operations may conflict or may be inconsistent. A manner in which the AP and a station accurately communicate is a subject that needs to be studied.

### SUMMARY

This application provides a power state determining method and apparatus, to determine a power state of a first access point in a power save mode in a case of different operations, to reduce power consumption of a transmit end and a receive end, and improve communication accuracy.

According to a first aspect, a power state determining method is provided, including the following process: An access point multi-link device determines that a first access point (AP) is in a power save mode; and the access point multi-link device determines a power state of the first access point based on a priority sequence of different operations when the first access point is in the power save mode.

Power states of the first access point may include an awake (Awake) state and a doze (Doze) state. In the awake state, the first access point is allowed to perform receiving/sending. To be specific, the first access point may receive/send a message packet in the awake state. In other words, the access point multi-link device may receive/send a message packet through the first access point in the awake state. In the doze state, the first access point is not allowed to perform receiving/sending. To be specific, the first access point cannot receive/send a message packet in the doze state. In other words, the access point multi-link device cannot receive/send a message packet through the first access point in the doze state.

Usually, if the first access point is in the power save mode, it is considered by default that the first access point is in the doze state. To be specific, the power state of the first access point is the doze state, the first station (namely, an associated station (station, STA) on a corresponding link) is also in the power save mode, and a default state is the doze state. In another implementation, it is specified in a protocol that only when all associated non-access point multi-link devices support a power save operation of the first access point and all stations associated with the first access point are in the power save mode, the first access point is allowed to enter the power save mode.

In the power save mode, the power state of the first access point and a power state of the first station may be adjusted through different operations. The operations include but are not limited to one or more of link disablement, an aperiodic wakeup request, and periodic target wakeup. Optionally, the link disablement may further include periodic link disablement and/or aperiodic link disablement.

For example, if the first access point is in the power save mode and an operation of the link disablement exists, the first access point maintains the doze state in an effective period (that is, from a start time to an end time) of the operation of the link disablement, and is not allowed to switch to the awake state.

For example, if the first access point is in the power save mode and receives the aperiodic wakeup request (namely, an operation of the aperiodic wakeup request exists), the first access point switches from the doze state to the awake state in response to the received wakeup request, and then switches from the awake state to the doze state after a station that sends the aperiodic wakeup request sets fifth indication information (for example, More Data (More Data)) to 0, or a station that sends the aperiodic wakeup request switches to the doze state, or a first channel is in an idle state (idle) for a period of time (for example, idle duration of the first channel exceeds first duration). In other words, the first access point switches to the awake state in an effective period of the aperiodic wakeup request (for example, from a time of responding to the aperiodic wakeup request to a time of meeting a condition that the fifth indication information is set to 0, or for another example, from a time of responding to the aperiodic wakeup request to a time of meeting a condition that the station that sends the aperiodic wakeup request switches to the doze state, or for still another example, from a time of responding to the aperiodic wakeup request to a time of meeting a condition that the idle duration of the first channel exceeds the first duration), and the first access point is in the doze state in a remaining time. Optionally, when receiving the wakeup request, the first access point may switch from the doze state to the awake state in response to the wakeup request; or the first access point may switch from the doze state to the awake state in response to the wakeup request in a period of time after receiving the wakeup request.

For example, if the first access point is in the power save mode and a target wakeup agreement (for example, a target wakeup time (Target Wake Time, TWT) protocol) is set up, the first access point maintains the awake state in an effective period of the periodic target wakeup (namely, a service period corresponding to the periodic target wakeup). To be specific, the first access point switches from the doze state to the awake state at a start time (a start time of the service period) of the periodic target wakeup, and switches from the awake state to the doze state at an end time (an end time of the service period or a start time of a non-service period) of the periodic target wakeup, or switches to the doze state when a specific condition (for example, a second condition) is met. The second condition herein mainly includes one or more of factors such as whether an AP side and a STA side have to-be-sent cache data, whether the STA is a TWT member (or whether the STA joins the target wakeup agreement), a type of the TWT, and whether a TWT service period (service period, SP) is allowed to be prolonged. For example, when no first station sets the fifth indication information (for example, More Data) to 1, and the first AP does not set the fifth indication information (for example, More Data) to 1 either, the first access point switches from the awake state to the doze state. For another example, the first AP switches from the awake state to the doze state when determining that all associated stations are in the doze state. For another example, if the periodic target wakeup is a restricted TWT (Restricted TWT, rTWT), when no associated station sets More Data of a last sent media protocol data unit (media protocol data unit, MPDU) to 1 and the first access point does not set More Data of the last sent MPDU to 1 either (in other words, neither the first AP end nor the first STA end needs to send to-be-transmitted data), the first access point switches to the doze state at the end time of the periodic target wakeup; or when an associated station sets More Data to 1 or the first access point sets More Data to 1, the first access point and a corresponding station maintain the awake state, until there is no to-be-transmitted data between the first station and the station.

It can be learned that, if a plurality of operations simultaneously exist, different operations may conflict or may be inconsistent. Consequently, the first access point cannot determine whether the power state is the awake state or the doze state, and communication cannot be performed accurately. However, in this method, if the first access point of the access point multi-link device is in the power save mode, and different operations exist in the power save mode, the access point multi-link device may determine the power state of the first access point based on a priority sequence of the different operations, to reduce power consumption of a transmit end and a receive end, and improving communication accuracy.

The access point multi-link device includes a plurality of access points. Usually, at least one of the plurality of access points is configured to receive/send a message packet (for example, a control frame and/or a data frame). For example, the access point multi-link device includes the first access point and a second access point, and there may be one or more first access points. For example, the first access point is in the doze state, and the second access point is in the awake state.

In a possible implementation, the periodic target wakeup is periodic target wakeup in the power save mode. In this implementation, the operation of the periodic target wakeup may be performed in the power save mode, to improve flexibility of controlling the power state of the first access point.

In a possible implementation, a priority of the link disablement is higher than a priority of the aperiodic wakeup request; and/or a priority of the link disablement is higher than a priority of the periodic target wakeup; and/or a priority of the aperiodic wakeup request is higher than a priority of the periodic target wakeup; and/or a priority of the aperiodic link disablement is higher than a priority of the aperiodic wakeup request, and/or the priority of the aperiodic wakeup request is higher than a priority of the periodic link disablement; and/or a priority of the aperiodic link disablement is higher than a priority of the periodic target wakeup, and/or the priority of the periodic target wakeup is higher than a priority of the periodic link disablement.

For example, if a plurality of operations simultaneously exist in a time period, the power state of the first access point is determined based on an operation with a highest priority in the plurality of operations. For example, when a plurality of operations in the link disablement, the aperiodic wakeup request, and the periodic target wakeup simultaneously exist in a time period, the power state of the first access point may be determined based on an operation with a highest priority. For another example, when a plurality of operations in the aperiodic link disablement, the aperiodic wakeup request, the periodic target wakeup, and the periodic link disablement simultaneously exist in a time period, the power state of the first access point may be determined based on an operation with a highest priority.

For example, if one operation exists in a time period, the power state of the first access point is determined based on the operation.

Optionally, if no operation exists in a time period, the power state of the first access point may be the doze state in the power save mode.

In a possible implementation, the priority of the link disablement is higher than the priority of the aperiodic wakeup request.

When the access point multi-link device determines the power state of the first access point based on a priority sequence of different operations when the first access point is in the power save mode, and when operations of the link disablement and the aperiodic wakeup request exist, because the priority of the link disablement is high, the access point multi-link device may determine the power state of the first access point based on a power state of the link disablement. The power state of the first access point is the doze state in the effective period of the link disablement.

For example, when the first access point receives the aperiodic wakeup request in the effective period of the link disablement, the first access point maintains the doze state in the effective period of the link disablement, and switches to the awake state after the end time of the link disablement. If the first access point is in the awake state before a start time of the link disablement, the first access point switches to the doze state at the start time of the link disablement, and switches to the awake state after the end time of the link disablement.

Optionally, the aperiodic wakeup request may be a wakeup request sent by a station.

In a possible scenario 1, the start time of the link disablement is earlier than or equal to a start time of the aperiodic wakeup request (for example, a time of responding to the aperiodic wakeup request). To be specific, the aperiodic wakeup request is received in the effective period of the link disablement, the link disablement starts before the aperiodic wakeup request, and the first access point is in the doze state in the effective period of the link disablement, even if the aperiodic wakeup request is received in the effective period. Optionally, if no aperiodic wakeup request is received before the link disablement, the first access point may also maintain the doze state (that is, a doze state is default in the power save mode) before the link disablement. Optionally, if the aperiodic wakeup request does not end after the link disablement (the fifth indication information is not set to 0, or the station sending the aperiodic wakeup request does not switch to the doze state, or the idle duration of the first channel does not exceed the first duration), and the end time of the link disablement is earlier than the end time of the aperiodic wakeup request, the first access point may switch from the doze state to the awake state after the end time of the link disablement. Optionally, if the end time of the link disablement is earlier than the start time of the aperiodic wakeup request, the first access point maintains the doze state in the effective period of the link disablement, and maintains the awake state in the effective period of the aperiodic wakeup request.

If the aperiodic wakeup request is not received before the link disablement, it indicates that no operation exists in a time period before the start time of the link disablement. Therefore, the power state of the first access point may be the doze state. If an operation of the aperiodic wakeup request exists in the effective period of the link disablement, it indicates that one or more operations exist in a time period. However, regardless of whether there are one or more operations, the priority of the link disablement is the highest. Therefore, the power state of the first access point may be determined based on the power state corresponding to the link disablement, that is, is the doze state. If the operation of the aperiodic wakeup request does not end after the link disablement, it indicates that the operation of the aperiodic wakeup request exists in a time period after the end time of the link disablement. Therefore, the power state of the first access point may be determined based on the power state corresponding to the aperiodic wakeup request, that is, is the awake state.

In a possible scenario 2, a start time of the aperiodic wakeup request is earlier than the start time of the link disablement, and an end time of the aperiodic wakeup request is later than the end time of the link disablement. The first access point switches to the awake state at the start time of the aperiodic wakeup request, and maintains the awake state before the start time of the link disablement. The first access point switches to the doze state at the start time of the link disablement, and maintains the doze state before the end time of the link disablement. The first access point switches to the awake state at the end time of the link disablement, and maintains the awake state before the end time of the aperiodic wakeup request. The first access point switches to the doze state at the end time of the aperiodic wakeup request.

An operation of the aperiodic wakeup request exists in a time period from the start time of the aperiodic wakeup request to the start time of the link disablement. Therefore, the power state of the first access point may be determined based on the power state corresponding to the aperiodic wakeup request, that is, is the awake state. If an operation of the aperiodic wakeup request exists in the effective period of the link disablement, it indicates that a plurality of operations exist in a time period. The priority of the link disablement is the highest. Therefore, the power state of the first access point may be determined based on the power state corresponding to the link disablement, that is, is the doze state. An operation of the aperiodic wakeup request exists in a time period from the end time of the link disablement to the end time of the aperiodic wakeup request. Therefore, the power state of the first access point may be determined based on the power state corresponding to the aperiodic wakeup request, that is, is the awake state.

In a possible implementation, for transmission in a case of the aperiodic wakeup request, if transmission is interrupted because of the link disablement, the interrupted transmission needs to continue after the link disablement ends.

It may be understood that the foregoing scenario is described by using only one operation of the link disablement and one operation of the aperiodic wakeup request as an example. A process of determining power states of a plurality of operations of a plurality of times of link disablement and/or a plurality of aperiodic wakeup requests is similar, and is not described herein one by one.

In a possible implementation, the priority of the link disablement is higher than the priority of the periodic target wakeup.

When the access point multi-link device determines the power state of the first access point based on a priority sequence of different operations when the first access point is in the power save mode, and when operations of the link disablement and the periodic target wakeup exist, because the priority of the link disablement is high, the access point multi-link device may determine the power state of the first access point based on a power state of the link disablement. The power state of the first access point is the doze state in the effective period of the link disablement.

For example, the first access point maintains the doze state in the effective period of the link disablement when the first access point performs an operation of the periodic target wakeup in the effective period of the link disablement. If the first access point is in the awake state before a start time of the link disablement, the first access point switches to the doze state at the start time of the link disablement, and maintains the doze state after the end time of the link disablement.

For example, that an operation of the periodic target wakeup may be understood as entering a service period of periodically scheduled target wakeup, and the effective period of the operation of the periodic target wakeup may be a service period corresponding to the periodic target wakeup.

In a possible scenario 1, the start time of the link disablement is earlier than or equal to the start time (for example, the start time of the service period) of the periodic target wakeup, the end time of the link disablement is later than or equal to the end time (for example, the end time of the service period) of the periodic target wakeup, and the first access point is in the doze state in the effective period of the link disablement. Optionally, if no periodic target wakeup exists before the link disablement, the first access point may also maintain the doze state before the link disablement. If no periodic target wakeup exists after the link disablement, the first access point may also maintain the doze state after the link disablement.

In a possible scenario 2, the start time of the periodic target wakeup is earlier than the start time of the link disablement of the access point, and the end time of the periodic target wakeup is later than the end time of the link disablement. The first access point switches to the awake state at the start time of the periodic target wakeup, and maintains the awake state before the start time of the link disablement. The first access point switches to the doze state at the start time of the link disablement, and maintains the doze state before the end time of the link disablement. The first access point switches to the awake state at the end time of the link disablement, and maintains the awake state before the end time of the periodic target wakeup. The first access point switches to the doze state at the end time of the periodic target wakeup.

In a possible scenario 3, the start time of the link disablement is earlier than the start time of the periodic target wakeup, and the end time of the link disablement is earlier than the end time of the periodic target wakeup. In other words, the link disablement starts before the periodic target wakeup, and ends before the periodic target wakeup. The first access point is in the doze state in the effective period of the link disablement. The first access point switches to the awake state at the end time of the link disablement, and maintains the awake state before the end time of the periodic target wakeup. The first access point switches to the doze state at the end time of the periodic target wakeup.

In a possible scenario 4, the start time of the periodic target wakeup is earlier than the start time of the link disablement, and the end time of the periodic target wakeup is earlier than the end time of the link disablement. In other words, the periodic target wakeup starts before the link disablement, and ends before the link disablement. The first access point switches to the awake state at the start time of the periodic target wakeup, and maintains the awake state before the start time of the link disablement. The first access point switches to the doze state at the start time of the link disablement, and maintains the doze state before the end time of the link disablement.

In a possible implementation, the priority of the aperiodic wakeup request is higher than the priority of the periodic target wakeup.

When the access point multi-link device determines the power state of the first access point based on the priority sequence of the different operations when the first access point is in the power save mode, and when operations of the aperiodic wakeup request and the periodic target wakeup exist, because the priority of the aperiodic wakeup request is high, the access point multi-link device may determine the power state of the first access point based on the aperiodic wakeup request.

For example, when the aperiodic wakeup is received in the service period corresponding to the periodic target wakeup, the first access point maintains the awake state unchanged. Optionally, the first access point maintains the awake state before a first condition is met.

For another example, when the aperiodic wakeup request is received in a period other than the service period corresponding to the periodic target wakeup, the first access point switches to the awake state in response to the received aperiodic wakeup request. Optionally, the first access point switches to the awake state when receiving the aperiodic wakeup request or after (a period of time after) receiving the aperiodic wakeup request, and maintains the awake state before the first condition is met.

For example, the first condition may include but is not limited to: a first station of a non-access point multi-link device that sends the aperiodic wakeup request sets the fifth indication information to 0 and a period is not the service period corresponding to the periodic target wakeup, and/or a station that sends the aperiodic wakeup request switches to a doze state and a period is not the service period corresponding to the periodic target wakeup, and/or the idle duration of the first channel exceeds the first duration and a period is not the service period corresponding to the periodic target wakeup. The fifth indication information may indicate whether to-be-transmitted data still exists, and that the fifth indication information is set to 0 indicates that no to-be-transmitted data exists. The first duration is a positive number. A value of the first duration is not limited herein.

Optionally, the first access point may switch back to the doze state when the first condition is met. If the first condition is met, the first access point switches from the awake state to the doze state in a period other than the service period corresponding to the periodic target wakeup, for example, a non-service period. If the first condition is met, the first access point may continue to maintain the awake state in the service period corresponding to the periodic target wakeup.

In a possible scenario 1, a start time of the aperiodic wakeup request is earlier than or equal to the start time of the periodic target wakeup, an end time of the aperiodic wakeup request is later than or equal to the end time of the periodic target wakeup, and the first access point is in the awake state in the effective period of the aperiodic wakeup request. Optionally, if no periodic target wakeup exists before the aperiodic wakeup request, the first access point may be in the doze state before the aperiodic wakeup request; and if no periodic target wakeup exists after the aperiodic wakeup request, the first access point may be in the doze state after the aperiodic wakeup request.

In a possible scenario 2, the start time of the periodic target wakeup is earlier than a start time of the aperiodic wakeup request, the end time of the periodic target wakeup is later than an end time of the aperiodic wakeup request, and the first access point is in the awake state in the effective period of the periodic target wakeup. Optionally, the first access point maintains the doze state before the start time of the periodic target wakeup and/or after the end time of the periodic target wakeup.

In a possible scenario 3, a start time of the aperiodic wakeup request is earlier than the start time of the periodic target wakeup, and an end time of the aperiodic wakeup request is earlier than the end time of the periodic target wakeup. In other words, the aperiodic wakeup request starts before the periodic target wakeup, and ends before the periodic target wakeup. The first access point switches to the awake state at the start time of the aperiodic wakeup request, and maintains the awake state before the end time of the periodic target wakeup. The first access point switches to the doze state at the end time of the periodic target wakeup.

In a possible scenario 4, the start time of the periodic target wakeup is earlier than a start time of the aperiodic wakeup request, and the end time of the periodic target wakeup is earlier than an end time of the aperiodic wakeup request. In other words, the periodic target wakeup starts before the aperiodic wakeup request, and ends before the aperiodic wakeup request. The first access point switches to the awake state at the start time of the periodic target wakeup, and maintains the awake state before the end time of the aperiodic wakeup request. The first access point switches to the doze state at the end time of the aperiodic wakeup request.

In a possible implementation, the priority of the link disablement is higher than the priority of the aperiodic wakeup request, and the priority of the aperiodic wakeup request is higher than the priority of the periodic target wakeup.

If operations of the link disablement, the aperiodic wakeup request, and the periodic target wakeup simultaneously exist in a time period, because the operation of the link disablement has a highest priority, the first access point may be in the doze state in the effective period of the disabled link of the access point. For example, when the access point multi-link device determines the power state of the first access point based on the priority sequence of the different operations when the first access point is in the power save mode, and when the operations of the link disablement, the aperiodic wakeup request, and the periodic target wakeup simultaneously exist, the first access point maintains the doze state in the effective period of the link disablement. In this implementation, because the priority of the link disablement is high, the access point multi-link device may determine the power state of the first access point based on the power state of the link disablement.

If operations of the link disablement and the aperiodic wakeup request (or the periodic target wakeup) simultaneously exist in a time period, because the operation of the link disablement has a highest priority, the first access point is in the doze state in the effective period of the disabled link of the access point.

If operations of the aperiodic wakeup request and the periodic target wakeup simultaneously exist in a time period, because the operation of the aperiodic wakeup request has a highest priority, the first access point may be in the awake state in the effective period of the operation of the aperiodic wakeup request. For example, when the link disablement does not exist and when the aperiodic wakeup request is received in a period other than the service period corresponding to the periodic target wakeup, the first access point switches to the awake state in response to the received aperiodic wakeup request.

If the operation of the link disablement exists in a time period, the first access point may be in the doze state in the effective period of the link disablement.

If the operation of the aperiodic wakeup request exists in a time period, the first access point may be in the awake state in the effective period of the aperiodic wakeup request.

If the operation of the periodic target wakeup exists in a time period, the first access point may be in the awake state in the effective period of the periodic target wakeup.

In a possible implementation, the priority of the aperiodic link disablement is higher than the priority of the aperiodic wakeup request, and the priority of the aperiodic wakeup request is higher than the priority of the periodic link disablement.

If operations of the aperiodic link disablement and the aperiodic wakeup request simultaneously exist in a time period, because the aperiodic link disablement has a highest priority, the first access point may be in the doze state in the effective period of the aperiodic link disablement. For example, when the access point multi-link device determines the power state of the first access point based on the priority sequence of the different operations when the first access point is in the power save mode, and when the first access point receives the aperiodic wakeup request in the effective period of the aperiodic link disablement, the first access point maintains the doze state in the effective period of the aperiodic link disablement.

If operations of the aperiodic wakeup request and the periodic link disablement simultaneously exist in a time period, because the aperiodic wakeup request has a highest priority, the first access point may be in the awake state in the effective period of the aperiodic wakeup request. For example, when the access point multi-link device determines the power state of the first access point based on the priority sequence of the different operations when the first access point is in the power save mode, and when the first access point receives the aperiodic wakeup request in the effective period of the periodic link disablement, the first access point switches to the awake state in response to receiving the aperiodic wakeup request.

If the operation of the aperiodic link disablement exists in a time period, the first access point may be in the doze state in the effective period of the aperiodic link disablement.

If the operation of the aperiodic wakeup request exists in a time period, the first access point may be in the awake state in the effective period of the aperiodic wakeup request.

If the operation of the periodic link disablement exists in a time period, the first access point may be in the doze state in the effective period of the periodic link disablement.

In a possible implementation, the priority of the aperiodic link disablement is higher than the priority of the periodic target wakeup, and the priority of the periodic target wakeup is higher than the priority of the periodic link disablement.

If operations of the aperiodic link disablement and the periodic target wakeup simultaneously exist in a time period, because the aperiodic link disablement has a highest priority, the first access point may be in the doze state in the effective period of the aperiodic link disablement. For example, when the access point multi-link device determines the power state of the first access point based on the priority sequence of the different operations when the first access point is in the power save mode, and when the first access point performs an operation of the periodic target wakeup in the effective period of the aperiodic link disablement, the first access point maintains the doze state in the effective period of the aperiodic link disablement.

If operations of the periodic target wakeup and the periodic link disablement simultaneously exist in a time period, because the periodic target wakeup has a highest priority, the first access point may be in the awake state in the effective period of the operation of the periodic target wakeup. For example, when the access point multi-link device determines the power state of the first access point based on the priority sequence of the different operations when the first access point is in the power save mode, and when the first access point performs the operation of the periodic target wakeup in the effective period of the periodic link disablement, the first access point switches to the awake state at the start time of the periodic target wakeup, and switches to the doze state at the end time of the periodic target wakeup.

If the operation of the aperiodic link disablement exists in a time period, the first access point may be in the doze state in the effective period of the aperiodic link disablement.

If the operation of the periodic target wakeup exists in a time period, the first access point may be in the awake state in the effective period of the periodic target wakeup.

If the operation of the periodic link disablement exists in a time period, the first access point may be in the doze state in the effective period of the periodic link disablement.

If operations of the aperiodic link disablement, the aperiodic wakeup request, and the periodic target wakeup simultaneously exist in a time period, because the aperiodic link disablement has a highest priority, the first access point is in the doze state in the effective period of the aperiodic link disablement.

In a possible implementation, the first access point in the power save mode is not allowed to send one or more of a beacon frame, a probe response frame, an association response frame, a multicast data frame, or a multicast management frame. In this implementation, one or more of the beacon frame, the probe response frame, and the association response frame are not allowed to be sent, so that a legacy station can be prevented from being associated, and the multicast data frame and/or the multicast management frame are/is not allowed to be sent, so that power consumption of the first access point can be reduced.

In a possible implementation, the access point multi-link device sends a reduced neighbor report element. A target beacon transmission time information field corresponding to the first access point in the reduced neighbor report element is set to a first value, and a target beacon transmission time information length is set to a second value, so that a legacy station ignores the first access point. In this implementation, if the first access point is in the power save mode, the reduced neighbor report element enables the legacy station to ignore the first access point, so that the legacy station can be prevented from discovering the first access point, probing the first access point, and being associated with the first access point.

In a possible implementation, the access point multi-link device receives the aperiodic wakeup request. The aperiodic wakeup request is used to wake up the first access point in the power save mode. The access point multi-link device switches the first access point from the doze state to the awake state. In this implementation, the first access point may be woken up based on the aperiodic wakeup request, to implement switching from the doze state to the awake state.

In a possible implementation, the access point multi-link device switches the first access point from the doze state to the awake state when entering the service period. In this implementation, the first access point may periodically wake up and doze, to implement switching between the doze state and the awake state, and reduce power consumption of the first access point.

In a possible implementation, the access point multi-link device sends a first physical layer protocol data unit (physical layer protocol data unit, PPDU). The first PPDU carries first indication information, the first indication information indicates a power management mode that the first access point is in, and the power mode includes a power save mode and/or an active mode. In this implementation, the power management mode that the first access point is in may be notified to another access point or a station, to further improve communication accuracy.

In a possible implementation, the first indication information is a power management field, and the power management field occupies 1 bit.

For example, when the 1 bit is set to 1 (or 0), it indicates that the first access point is in the power save mode; and when the 1 bit is set to 0 (or 1), it indicates that the first access point is in the active mode.

In a possible implementation, if the first access point is in a power save mode, the access point multi-link device sends a second PPDU. The second PPDU carries a media access control header field, the media access control header field carries second indication information, and the second indication information indicates that the first access point is in the power save mode. In this implementation, the power management mode that the first access point is in may be notified to another access point or a station, to further improve communication accuracy.

In a possible implementation, the access point multi-link device sends a power save multi-link element. The power save multi-link element includes a wakeup delay field and/or a start time field of entering the power save mode, the wakeup delay field indicates a time required for switching the first access point from the doze state to the awake state, and the start time field indicates a time at which the first access point enters the power save mode. In this implementation, information about when the first access point enters the power save mode is notified to another access point or a station, to further improve communication accuracy.

In a possible implementation, the access point multi-link device receives a third PPDU. The third PPDU carries third indication information, and the third indication information indicates that a first station or a second access point supports a power save operation of the first access point, or the fourth indication information indicates that a first station or a second access point does not support a power save operation of the first access point.

When the first station or the second access point supports the power save operation of the first access point, the first access point and the first station or the second access point may choose, based on an awake state or a doze state in the power save mode, whether to communicate, to further improve communication accuracy.

Optionally, when the first station or the second access point does not support the power save operation of the first access point, the first access point may send the reduced neighbor report element, so that the first station or the second access point ignores the first access point.

In a possible implementation, the access point multi-link device sends a traffic identifier-to-link mapping element if the first access point is not in a mode of the link disablement. The traffic identifier-to-link mapping element includes fourth indication information, and the fourth indication information indicates that a second station is allowed to perform transmission through an enhanced distributed channel, or the fourth indication information indicates that a second station is not allowed to perform transmission through an enhanced distributed channel. In this implementation, the second station performs transmission in different channel access manners, to facilitate transmission of a low-delay service.

According to a second aspect, a power state determining method is provided, including the following process: A non-access point multi-link device determines that a first access point of an access point multi-link device is in a power save mode; and the non-access point multi-link device determines a power state of the first access point based on a priority sequence of different operations when the first access point is in the power save mode. The operations include one or more of link disablement, aperiodic wakeup, and periodic target wakeup.

For example, the non-access point multi-link device may determine, based on the power state of the first access point, a power state of a first station associated with the first access point in the non-access point multi-link device. For example, when the power state of the first access point is an awake state, the power state of the first station is also the awake state, to improve communication accuracy of a transmit end and a receive end. For another example, when the power state of the first access point is a doze state, the power state of the first station is also the doze state, to reduce power consumption of a transmit end and a receive end.

A process in which the non-access point multi-link device determines the power state of the first access point is similar to the process in which the access point multi-link device determines the power state of the first access point in the first aspect. Details are not described herein again.

In a possible implementation, the periodic target wakeup is periodic target wakeup in the power save mode.

In a possible implementation, a priority of the link disablement is higher than a priority of the aperiodic wakeup request; and/or a priority of the link disablement is higher than a priority of the periodic target wakeup; and/or a priority of the aperiodic wakeup request is higher than a priority of the periodic target wakeup; and/or a priority of aperiodic link disablement is higher than a priority of an aperiodic wakeup request, and the priority of the aperiodic wakeup request is higher than a priority of periodic link disablement; and/or a priority of the aperiodic link disablement is higher than a priority of the periodic target wakeup, and the priority of the periodic target wakeup is higher than a priority of the periodic link disablement.

In a possible implementation, the priority of the link disablement is higher than the priority of the aperiodic wakeup request.

When the non-access point multi-link device determines the power state of the first access point based on the priority sequence of the different operations when the first access point is in the power save mode, and when the first access point is in the effective period of the link disablement and the non-access point multi-link device sends the aperiodic wakeup request to the first access point, the first access point maintains a doze state in the effective period of the link disablement, and switches to an awake state after an end time of the link disablement. The doze state does not allow the first access point to perform receiving/sending, and the awake state allows the first access point to perform receiving/sending.

In a possible implementation, the priority of the link disablement is higher than the priority of the periodic target wakeup.

When the access point multi-link device determines the power state of the first access point based on the priority sequence of the different operations when the first access point is in the power save mode, and when the first access point performs an operation of the periodic target wakeup in the effective period of the aperiodic link disablement, the first access point maintains the doze state in the effective period of the aperiodic link disablement.

In a possible implementation, the priority of the aperiodic wakeup request is higher than the priority of the periodic target wakeup.

When the non-access point multi-link device determines the power state of the first access point based on the priority sequence of the different operations when the first access point is in the power save mode, and when the non-access point multi-link device sends the aperiodic wakeup request to the first access point in a period other than the service period corresponding to the periodic target wakeup, the first access point switches to the awake state in response to the aperiodic wakeup request.

In a possible implementation, the priority of the link disablement is higher than the priority of the aperiodic wakeup request, and the priority of the aperiodic wakeup request is higher than the priority of the periodic target wakeup.

When the non-access point multi-link device determines the power state of the first access point based on the priority sequence of the different operations when the first access point is in the power save mode, the first access point maintains a doze state in the effective period of the link disablement when the operations of the link disablement, the aperiodic wakeup request, and the periodic target wakeup simultaneously exist; or the first access point switches to an awake state in response to the aperiodic wakeup request when the link disablement does not exist and when the non-access point multi-link device sends the aperiodic wakeup request to the first access point in a period other than the service period corresponding to the periodic target wakeup.

In a possible implementation, the priority of the aperiodic link disablement is higher than the priority of the aperiodic wakeup request, and the priority of the aperiodic wakeup request is higher than the priority of the periodic link disablement.

When the non-access point multi-link device determines the power state of the first access point based on the priority sequence of the different operations when the first access point is in the power save mode, the first access point maintains a doze state in the effective period of the aperiodic link disablement when the first access point in the effective period of the aperiodic link disablement and the non-access point multi-link device sends the aperiodic wakeup request to the first access point; or the first access point switches to an awake state in response to the aperiodic wakeup request when the first access point is in the effective period of the periodic link disablement and the non-access point multi-link device sends the aperiodic wakeup request to the first access point.

In a possible implementation, the priority of the aperiodic link disablement is higher than the priority of the periodic target wakeup, and the priority of the periodic target wakeup is higher than the priority of the periodic link disablement.

When the non-access point multi-link device determines the power state of the first access point based on the priority sequence of the different operations when the first access point is in the power save mode, the first access point maintains a doze state in the effective period of the aperiodic link disablement when the first access point performs an operation of the periodic target wakeup in the effective period of the aperiodic link disablement; or when the first access point performs an operation of the periodic target wakeup in the effective period of the periodic link disablement, the first access point switches to an awake state at a start time of the periodic target wakeup, and switching to a doze state at an end time of the periodic target wakeup.

In a possible implementation, the non-access point multi-link device receives a reduced neighbor report element. A target beacon transmission time information field corresponding to the first access point in the reduced neighbor report element is set to a first value, and a target beacon transmission time information length is set to a second value, so that a legacy station ignores the first access point.

In a possible implementation, the non-access point multi-link device sends the aperiodic wakeup request. The aperiodic wakeup request is used to wake up the first access point in the power save mode.

In a possible implementation, the non-access point multi-link device receives a first PPDU. The first PPDU carries first indication information, the first indication information indicates a power management mode that the first access point is in, and the power mode includes the power save mode.

In a possible implementation, the first indication information is a power management field, and the power management field occupies 1 bit.

In a possible implementation, the non-access point multi-link device receives a second PPDU. The second PPDU carries a media access control header field, the media access control header field carries second indication information, and the second indication information indicates that the first access point is in the power save mode.

In a possible implementation, the access point multi-link device receives a power save multi-link element. The power save multi-link element includes a wakeup delay field and/or a start time field of entering the power save mode, the wakeup delay field indicates a time required for switching the first access point from the doze state to the awake state, and the start time field indicates a time at which the first access point enters the power save mode.

In a possible implementation, the non-access point multi-link device sends a third PPDU. The third PPDU carries third indication information, and the third indication information indicates that a first station of a non-access point multi-link device supports a power save operation of the first access point, or the third indication information indicates that the first station does not support a power save operation of the first access point.

In a possible implementation, the non-access point multi-link device receives a traffic identifier-to-link mapping element. The traffic identifier-to-link mapping element includes fourth indication information, and the fourth indication information indicates that a second station of the non-access point multi-link device is allowed to perform transmission through an enhanced distributed channel, or the fourth indication information indicates that a second station is not allowed to perform transmission through an enhanced distributed channel. The first station and the second station may be the same or different.

According to a third aspect, a power state determining apparatus is provided. The power state determining apparatus may be the foregoing access point multi-link device, or may be a chip disposed in the access point multi-link device. The power state determining apparatus may implement the method in the first aspect.

The power state determining apparatus includes a mode determining unit and a power state determining unit.

For example, the mode determining unit is configured to determine that a first access point is in a power save mode.

The power state determining unit is configured to determine a power state of the first access point based on a priority sequence of different operations when the first access point is in the power save mode.

In a possible implementation, for transmission in a case of an aperiodic wakeup request, if transmission is interrupted because of the link disablement, the interrupted transmission needs to continue after the link disablement ends.

In a possible implementation, a priority of the link disablement is higher than a priority of the aperiodic wakeup request; or a priority of the link disablement is higher than a priority of the periodic target wakeup; or a priority of the aperiodic wakeup request is higher than a priority of the periodic target wakeup; or a priority of aperiodic link disablement is higher than a priority of the aperiodic wakeup request, and the priority of the aperiodic wakeup request is higher than a priority of periodic link disablement; or a priority of the aperiodic link disablement is higher than a priority of the periodic target wakeup, and the priority of the periodic target wakeup is higher than a priority of the periodic link disablement.

In a possible implementation, the power state determining unit is specifically configured to: when the first access point receives the aperiodic wakeup request in an effective period of the link disablement, maintain, by the first access point, a doze state in the effective period of the link disablement, and switch to an awake state after an end time of the link disablement. The doze state does not allow the first access point to perform receiving/sending, and the awake state allows the first access point to perform receiving/sending.

In a possible implementation, the power state determining unit is specifically configured to maintain, by the first access point, a doze state in an effective period of the link disablement when the first access point performs an operation of the periodic target wakeup in the effective period of the link disablement.

In a possible implementation, the power state determining unit is specifically configured to: when the aperiodic wakeup request is received in a period other than a service period corresponding to the periodic target wakeup, switch, by the first access point, to an awake state in response to the received aperiodic wakeup request.

In a possible implementation, the power state determining unit is specifically configured to: maintain, by the first access point, a doze state in an effective period of the link disablement when the operations of the link disablement, the aperiodic wakeup request, and the periodic target wakeup simultaneously exist; or switch, by the first access point, to an awake state in response to the received aperiodic wakeup request when the link disablement does not exist and when the aperiodic wakeup request is received in a period other than a service period corresponding to the periodic target wakeup.

In a possible implementation, the power state determining unit is specifically configured to: maintain, by the first access point, a doze state in an effective period of the aperiodic link disablement when the first access point receives the aperiodic wakeup request in the effective period of the aperiodic link disablement; or switch, by the first access point, to an awake state in response to the received aperiodic wakeup request when the first access point receives the aperiodic wakeup request in an effective period of the periodic link disablement.

In a possible implementation, the power state determining unit is specifically configured to: maintain, by the first access point, a doze state in an effective period of the aperiodic link disablement when the first access point performs an operation of the periodic target wakeup in the effective period of the aperiodic link disablement; or when the first access point performs an operation of the periodic target wakeup in an effective period of the periodic link disablement, switch, by the first access point, to an awake state at a start time of the periodic target wakeup, and switch to a doze state at an end time of the periodic target wakeup.

In a possible implementation, the first access point in the power save mode is not allowed to send one or more of a beacon frame, a probe response frame, an association response frame, a multicast data frame, or a multicast management frame.

In a possible implementation, the power state determining unit is further configured to send a reduced neighbor report element. A target beacon transmission time information field corresponding to the first access point in the reduced neighbor report element is set to a first value, and a target beacon transmission time information length is set to a second value, so that a legacy station ignores the first access point.

In a possible implementation, the power state determining unit is further configured to: receive the aperiodic wakeup request. The aperiodic wakeup request is used to wake up the first access point in the doze state. The first access point is switched from the doze state to the awake state.

In a possible implementation, the power state determining unit is further configured to switch the first access point from the doze state to the awake state when entering the service period.

In a possible implementation, the power state determining unit is further configured to send a first PPDU. The first PPDU carries first indication information, the first indication information indicates a power management mode that the first access point is in, and the power mode includes the power save mode.

In a possible implementation, the first indication information is a power management field, and the power management field occupies 1 bit.

In a possible implementation, the power state determining unit is further configured to send a second PPDU if the first access point is in a power save mode. The second PPDU carries a media access control header field, the media access control header field carries second indication information, and the second indication information indicates that the first access point is in the power save mode.

In a possible implementation, the power state determining unit is further configured to send a power save multi-link element. The power save multi-link element includes a wakeup delay field and/or a start time field of entering the power save mode, the wakeup delay field indicates a time required for switching the first access point from the doze state to the awake state, and the start time field indicates a time at which the first access point enters the power save mode.

In a possible implementation, the power state determining unit is further configured to receive a third PPDU. The third PPDU carries third indication information, and the third indication information indicates that a first station or a second access point supports a power save operation of the first access point, or the third indication information indicates that a first station or a second access point does not support a power save operation of the first access point.

In a possible implementation, the power state determining unit is further configured to send a traffic identifier-to-link mapping element if the first access point is not in a mode of the link disablement. The traffic identifier-to-link mapping element includes fourth indication information, and the fourth indication information indicates that a second station is allowed to perform transmission through an enhanced distributed channel, or the fourth indication information indicates that a second station is not allowed to perform transmission through an enhanced distributed channel.

According to a fourth aspect, a power state determining apparatus is provided. The power state determining apparatus may be the foregoing non-access point multi-link device, or may be a chip disposed in the non-access point multi-link device. The power state determining apparatus may implement the method in the second aspect.

The power state determining apparatus includes a mode determining unit and a power state determining unit.

For example, the mode determining unit is configured to determine that a first access point of an access point multi-link device is in a power save mode.

The power state determining unit is configured to determine a power state of the first access point based on a priority sequence of different operations when the first access point is in the power save mode.

In a possible implementation, a priority of link disablement is higher than a priority of an aperiodic wakeup request; or a priority of link disablement is higher than a priority of periodic target wakeup; or a priority of an aperiodic wakeup request is higher than a priority of periodic target wakeup; or a priority of aperiodic link disablement is higher than a priority of an aperiodic wakeup request, and the priority of the aperiodic wakeup request is higher than a priority of periodic link disablement; or a priority of aperiodic link disablement is higher than a priority of periodic target wakeup, and the priority of the periodic target wakeup is higher than a priority of periodic link disablement.

The power state determining unit is specifically configured to: when the first access point is in an effective period of the link disablement and the power state determining apparatus sends the aperiodic wakeup request to the first access point, maintain, by the first access point, a doze state in the effective period of the link disablement, and switch to an awake state after an end time of the link disablement. The doze state does not allow the first access point to perform receiving/sending, and the awake state allows the first access point to perform receiving/sending.

In a possible implementation, the power state determining unit is specifically configured to maintain, by the first access point, a doze state in an effective period of the link disablement when the first access point performs an operation of the periodic target wakeup in the effective period of the link disablement.

In a possible implementation, the power state determining unit is specifically configured to switch, by the first access point, to an awake state in response to the aperiodic wakeup request when the power state determining apparatus sends the aperiodic wakeup request to the first access point in a period other than a service period corresponding to the periodic target wakeup.

In a possible implementation, the power state determining unit is specifically configured to: maintain, by the first access point, a doze state in an effective period of the link disablement when the operations of the link disablement, the aperiodic wakeup request, and the periodic target wakeup simultaneously exist; or switch, by the first access point, to an awake state in response to the aperiodic wakeup request when the link disablement does not exist and when the power state determining apparatus sends the aperiodic wakeup request to the first access point in a period other than a service period corresponding to the periodic target wakeup.

In a possible implementation, the power state determining unit is specifically configured to: maintain, by the first access point, a doze state in an effective period of the aperiodic link disablement when the first access point in the effective period of the aperiodic link disablement and the power state determining apparatus sends the aperiodic wakeup request to the first access point; or switch, by the first access point, to an awake state in response to the aperiodic wakeup request when the first access point is in an effective period of the periodic link disablement and the power state determining apparatus sends the aperiodic wakeup request to the first access point.

In a possible implementation, the power state determining unit is specifically configured to: maintain, by the first access point, a doze state in an effective period of the aperiodic link disablement when the first access point performs an operation of the periodic target wakeup in the effective period of the aperiodic link disablement; or when the first access point performs an operation of the periodic target wakeup in an effective period of the periodic link disablement, switch, by the first access point, to an awake state at a start time of the periodic target wakeup, and switch to a doze state at an end time of the periodic target wakeup.

In a possible implementation, the power state determining unit is further configured to receive a reduced neighbor report element. A target beacon transmission time information field corresponding to the first access point in the reduced neighbor report element is set to a first value, and a target beacon transmission time information length is set to a second value, so that a legacy station ignores the first access point.

In a possible implementation, the power state determining unit is further configured to send the aperiodic wakeup request. The aperiodic wakeup request is used to wake up the first access point in the power save mode.

In a possible implementation, the power state determining unit is further configured to receive a first PPDU. The first PPDU carries first indication information, the first indication information indicates a power management mode that the first access point is in, and the power mode includes the power save mode.

In a possible implementation, the first indication information is a power management field, and the power management field occupies 1 bit.

In a possible implementation, the power state determining unit is further configured to receive a second PPDU. The second PPDU carries a media access control header field, the media access control header field carries second indication information, and the second indication information indicates that the first access point is in the power save mode.

In a possible implementation, the power state determining unit is further configured to receive a power save multi-link element. The power save multi-link element includes a wakeup delay field and/or a start time field of entering the power save mode, the wakeup delay field indicates a time required for switching the first access point from the doze state to the awake state, and the start time field indicates a time at which the first access point enters the power save mode.

In a possible implementation, the power state determining unit is further configured to send a third PPDU. The third PPDU carries third indication information, and the third indication information indicates that a first station of a non-access point multi-link device supports a power save operation of the first access point, or the third indication information indicates that the first station does not support a power save operation of the first access point.

In a possible implementation, the power state determining unit is further configured to receive a traffic identifier-to-link mapping element. The traffic identifier-to-link mapping element includes fourth indication information, and the fourth indication information indicates that a second station of the non-access point multi-link device is allowed to perform transmission through an enhanced distributed channel, or the fourth indication information indicates that a second station is not allowed to perform transmission through an enhanced distributed channel.

According to a fifth aspect, a communication apparatus is provided, including a processor, configured to perform the method in the first aspect or the second aspect.

Optionally, the apparatus further includes a memory, the memory stores instructions, and the processor executes the instructions in the memory, so that the method in the first aspect or the second aspect is performed.

Optionally, the memory is located inside or outside the apparatus.

Optionally, the apparatus further includes an interface circuit, and the processor is coupled to the interface circuit.

Optionally, there are one or more processors, and there are one or more memories.

Optionally, the memory may be integrated with the processor, or the memory and the processor are disposed separately.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

The communication apparatus may be a chip. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory. The memory may be integrated into the processor, and may be located outside the processor and exist independently.

According to a sixth aspect, a processor is provided, including an input circuit, an output circuit, and a processing circuit. The processing circuit is configured to receive a signal through the input circuit and transmit a signal through the output circuit, so that the processor performs the method the first aspect or the second aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit. The circuit is used as the input circuit and the output circuit at different moments. Specific implementations of the processor and the various circuits are not limited in embodiments of this application.

According to a seventh aspect, a computer program product is provided. The computer program product includes a computer program (which may also be referred to as code or instructions), and when the computer program is run, a computer is enabled to perform the method in the first aspect or the second aspect.

According to an eighth aspect, a computer-readable medium is provided. The computer-readable medium stores a computer program (which may also be referred to as code or instructions). When the computer program runs on a computer, the computer is enabled to perform the method in the first aspect or the second aspect.

According to a ninth aspect, a chip system is provided. The chip system includes a processor and an interface, and is configured to support a communication apparatus to implement the function in the first aspect or the second aspect. In a possible design, the chip system further includes a memory. The memory is configured to store necessary information and data of the communication apparatus. The chip system may include a chip, or may include a chip and another discrete component.

According to a tenth aspect, a functional entity is provided. The functional entity is configured to implement the method in the first aspect or the second aspect.

According to an eleventh aspect, a communication system is provided, including an access point multi-link device for implementing the method in the first aspect and a non-access point multi-link device for implementing the method in the second aspect.
For technical effects brought by any one of the implementations in the second aspect to the eleventh aspect, refer to technical effects brought by the first aspect. Details are not described again.

### BRIEF DESCRIPTION OF DRAWINGS

FIG. 1 is a diagram of a multi-link device;
FIG. 2 is a diagram of a structure of a communication system;
FIG. 3 is a diagram of a structure of a communication system;
FIG. 4 is a schematic flowchart of power determining process according to an embodiment of this application;
FIG. 5 is a diagram of a frame structure of a traffic identifier (traffic identifier, TID)-to-link mapping element (TID-to-link mapping element) according to an embodiment of this application;
FIG. 6 is a diagram of an individual TWT according to an embodiment of this application;
FIG. 7 is a diagram of a format of a broadcast TWT element (element) according to an embodiment of this application;
FIG. 8A is a schematic flowchart of determining a power state according to an embodiment of this application;
FIG. 8B is a schematic flowchart of determining a power state according to an embodiment of this application;
FIG. 8C is a schematic flowchart of determining a power state according to an embodiment of this application;
FIG. 8D is a schematic flowchart of determining a power state according to an embodiment of this application;
FIG. 8E is a schematic flowchart of determining a power state according to an embodiment of this application;
FIG. 9 is a diagram of a format of a multi-link device parameter (MLD Parameters) field according to an embodiment of this application;
FIG. 10 is a diagram of a format of an MLD parameters field according to an embodiment of this application;
FIG. 11 is a diagram of a frame structure of a multi-link element (Multi-link Element) according to an embodiment of this application;
FIG. 12 is a diagram of a format of a presence bitmap (Presence Bitmap) field according to an embodiment of this application;
FIG. 13 is a diagram of a frame structure of a power save multi-link element according to an embodiment of this application;
FIG. 14 is a diagram of a frame structure of a reduced neighbor report element according to an embodiment of this application;
FIG. 15 is a diagram of a frame structure of a target beacon transmission time (Target beacon transmission Time, TBTT) information field according to an embodiment of this application;
FIG. 16 is a diagram of a frame structure of a basic service set parameter (BSS Parameter) field according to an embodiment of this application;
FIG. 17 is a diagram of a structure of a power state determining apparatus according to an embodiment of this application;
FIG. 18 is a diagram of a structure of a power state determining apparatus according to an embodiment of this application;
FIG. 19 is a diagram of a structure of a communication apparatus according to an embodiment of this application; and
FIG. 20 is a diagram of a structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless local area network (wireless local area network, WLAN) communication system, a long term evolution (long term evolution, LTE) system, and an LTE frequency division duplex (frequency division duplex, FDD) system, an LTE time division duplex (time division duplex, TDD) system, a 5^{th} generation (5^{th} generation, 5G) system, new radio (new radio, NR), a future 6^{th} generation (6^{th} generation, 6G) system, and the like.

For example, embodiments of this application may be applied to a WLAN system, and embodiments of this application may be applied to any protocol in the institute of electrical and electronics engineers (institute of electrical and electronics engineers, IEEE) 802.11 series protocols used by the WLAN, for example, 802.11a/b/g, 802.11n, 802.11ac, 802.11ax, 802.11be, 802.11bf, and a future 802.11 protocol. The methods provided in this application may be implemented by a communication device in a wireless communication system or a chip or a processor in the communication device. Correspondingly, the communication device supports communication via IEEE 802.11 series protocols. Although embodiments of this application are mainly described by using a network deployed with IEEE 802.11 as an example, a person skilled in the art easily understand that aspects in this application may be extended to other networks using various standards or protocols, for example, Bluetooth (Bluetooth), a high performance radio local area network (local area network, LAN) (high performance radio LAN, HIPERLAN) (a wireless standard similar to the IEEE 802.11 standard, mainly used in Europe), a wide area network (wide area network, WAN), a WLAN, a personal area network (personal area network, PAN), or another network that is known or developed later. Therefore, regardless of used coverage and a used wireless access protocol, various aspects provided in this application are applicable to any appropriate wireless network.

The WLAN may operate in a low frequency band and a high frequency band. The low frequency band includes sub 1 gigahertz (GHz), 2.4 GHz, 5 GHz, 6 GHz, and the like, and the high frequency band includes 60 GHz, and the like. Although 802.11ax (Wi-Fi 6) and earlier multi-band wireless fidelity (wireless fidelity, Wi-Fi) are configured with a plurality of links, each multi-link usually sets up a different basic service set (basic service set, BSS), and communication can be performed, on only one link at one moment, with a station in a BSS to which the link belongs. Operations on the links lack enough cooperation.

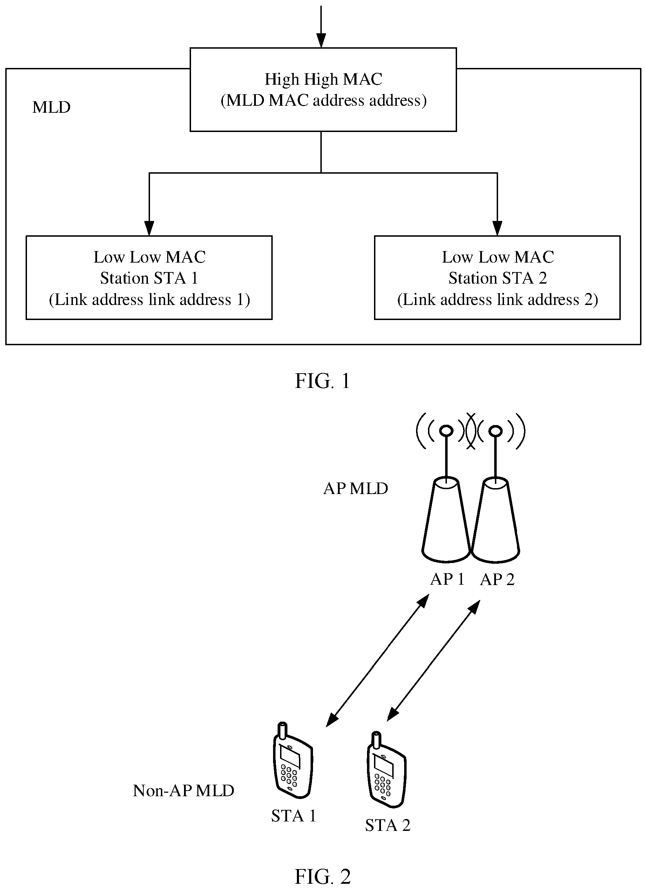

In the IEEE 802.11 next-generation Wi-Fi extremely high throughput (extremely high throughput, EHT) protocol, an ultra-large bandwidth on the new 6 GHz frequency band is used to transmit information packets, and a plurality of discontinuous links may also be aggregated to form an ultra-large bandwidth by using a multi-link cooperation technology. A device that can implement a multi-link cooperation technology is referred to as a multi-link device (MLD). The MLD includes an AP MLD and/or a non-access point (non-AP) MLD. For example, the non-AP MLD may be a STA MLD. The MLD may have a plurality of radio frequency modules operating on different frequency bands, channels, or links (links). For example, a frequency band on which the MLD operates may be all or a part of the sub 1 GHz, 2.4 GHz, 5 GHz, 6 GHz, and a high frequency 60 GHz. This is not limited herein. The MLD includes one or more affiliated (affiliated) stations. The stations may be APs or STAs. Each affiliated station has a respective media access control (media access control, MAC) address (address). As shown in FIG. 1, a STA 1 has a respective lower (low) MAC address, namely, a link address 1, and a STA 2 has a respective low MAC address, namely, a link address 2. The MLD further has a high (high) MAC address, namely, an MLD MAC address.

The MLD may aggregate larger bandwidths, and may further use the multi-link cooperation technology, for example, sharing of MAC layers on a plurality of links, to flexibly transmit message packets, or simultaneously send message packets of a same service to a same station. The AP MLD may set up association with the non-AP MLD on one link, to quickly implement association setup on a plurality of links.

FIG. 2 is a diagram of an architecture of a communication system to which embodiments of this application are applicable. The communication system includes one or more AP MLDs and one or more non-AP MLDs. The AP MLD includes an AP 1 and an AP 2, and the non-AP MLD includes a STA 1 and a STA 2. Optionally, the communication system may further include one or more legacy (Legacy) STAs. The communication system shown in embodiments of this application is merely an example for description, and a communication system to which this application is applicable is not limited thereto. This is uniformly described herein, and details are not described below again.

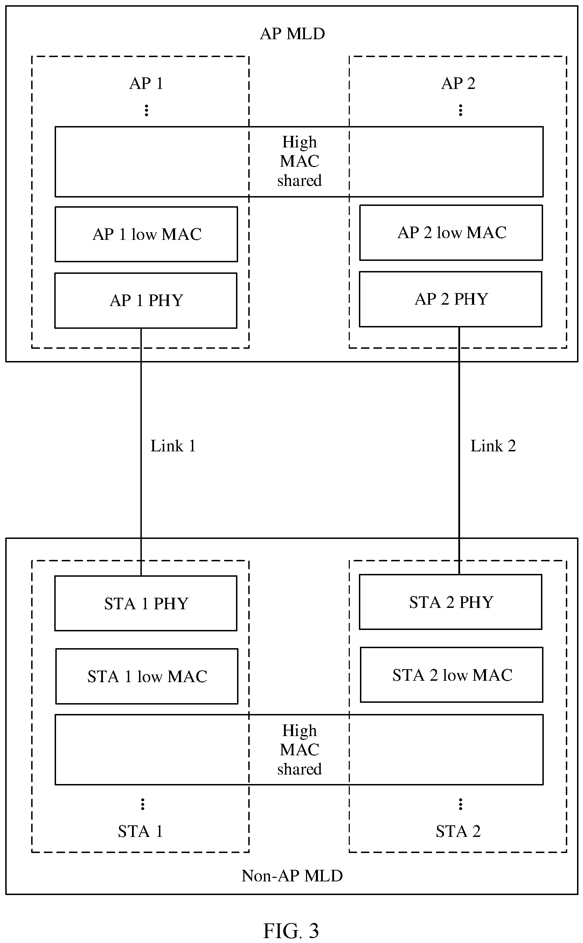

As shown in FIG. 3, the AP MLD includes the AP 1 and the AP 2. The AP 1 includes an AP 1 PHY, AP 1 low MAC, and high MAC. The AP 2 includes an AP 2 PHY, AP 2 low MAC, and the high MAC. The AP 1 and the AP 2 share the high MAC. The non-AP MLD includes the STA 1 and the STA 2. The STA 1 includes a STA 1 PHY, STA 1 low MAC, and high MAC. The STA 2 includes a STA 2 PHY, STA 2 low MAC, and the high MAC. The STA 1 and the STA 2 share the high MAC, the AP 1 and the STA 1 are connected through a link 1, and the AP 2 and the STA 2 are connected through a link 2.

When a plurality of links are set up, the non-AP MLD sends an association request (Association Request) frame on the link 1, and the association request frame carries STA-side information of the link 1 and STA-side information of the link 2. The association request frame may carry a multi-link element (Multi-link Element), and the multi-link element is used to carry information about the MLD and information about the stations in the MLD. The AP MLD sends an association response (Association Response) frame on the link 1, and the association response frame carries AP-side information of the link 1 and AP-side information of the link 2. In this way, the STA 1 and the STA 2 of the non-AP MLD set up association with the AP 1 and the AP 2 of the AP MLD respectively. A link (for example, the link 1) used for the exchanging association request/response frame is referred to as a transmitted link (Transmitted Link), and another link (for example, the link 2) is referred to as a non-transmitted link (Non-transmitted Link).

Before a plurality of links are set up, a STA may discover existence of an AP in a scanning manner of active scanning or passive scanning, to associate with the AP to set up a connection, so as to implement setup of the plurality of links. It is simply understood that a purpose of associating the STA with the AP to set up the connection is to set up one or more links (for example, the link 1 and the link 2 in FIG. 3) used for communication between the STA and the AP.

In a passive scanning process, the STA may receive a management frame (for example, a beacon (Beacon) frame or a broadcast probe response (Probe Response) frame) sent by the AP on a channel. For example, the STA may search for, through jumping on different channels, the beacon frame sent by the AP. Once the STA obtains management information of the AP through the beacon frame, the STA may further communicate with the AP through a probe request (Probe Request) frame or a probe response frame, to obtain other information from the AP.

In an active scanning process, the STA may actively broadcast a probe request frame when no beacon frame is detected through listening. After receiving the probe request frame, if a specific condition (the condition is not limited in embodiments of this application) is met, the AP may initiate random channel access to reply with a probe response frame.

To assist the STA in fast scanning, the AP may use the beacon frame or the probe response frame to carry a reduced neighbor report element (Reduced Neighbor Report Element, RNR element), to report related information of a corresponding AP. In this way, during scanning, the STA may obtain information about a neighboring AP and select an appropriate AP for association, so that the STA may not continuously scan the channels, to reduce a scanning time of the STA. According to a stipulation of 802.11be, an affiliated AP needs to carry, in a reduced neighbor report element, information about another affiliated AP that belongs to a same AP MLD as the affiliated AP. For the STA, the neighboring AP is a neighboring AP of the STA, and for the AP, the neighboring AP is a neighboring AP of the AP.

Two MLDs (for example, the AP MLD and the non-AP MLD) may communicate with each other on an established link (for example, the link 1 and the link 2). When a channel spacing between two radio frequency modules in the MLD is large enough, links corresponding to the two radio frequency modules may run independently, and do not interfere with each other. If data can be transmitted on one link and received on the other link in two links in the MLD, the two links can support simultaneous transmit and receive (simultaneous transmit and receive, STR). Otherwise, nonsimultaneous Transmit and receive (nonsimultaneous Transmit and receive, NSTR) are performed on the two links.

An implementation of the AP MLD is an NSTR mobile (mobile) AP MLD. According to a stipulation of the 802.11be protocol, the NSTR mobile AP MLD does not support STR (that is, usually supporting NSTR), and another type of AP MLD supports STR. The NSTR mobile AP MLD can implement a function of the AP MLD on the non-AP MLD by using software. In a scenario, a mobile phone may be set as an NSTR mobile AP MLD, to allow association with another device. For an NSTR link pair in the NSTR mobile AP MLD, one link may be defined as a primary link (Primary Link), and the other link may be defined as a non-primary link (Non-primary Link). An AP corresponding to the primary link is referred to as a primary AP (Primary AP), and an AP corresponding to a non-primary link is referred to as a non-primary AP (Non-primary AP). The non-primary AP is not allowed to send a beacon frame and reply with a probe response frame, so that the legacy STA can be prevented from being associated with the non-primary AP. The non-AP MLD may carry related information of the non-primary link on the primary link, to implement an operation of using the non-primary link.

In some possible scenarios, the AP may be in a power save mode. In the power save mode, an AP can switch between an awake state and a doze state when a specific condition is met. In the power save mode, when a plurality of operations may conflict or be inconsistent, a power state of the AP cannot be determined, and correct operations and data transmission cannot be implemented.

Therefore, an embodiment of this application provides a power state determining method, to determine a power state of an AP, to implement correct operations and data transmission.

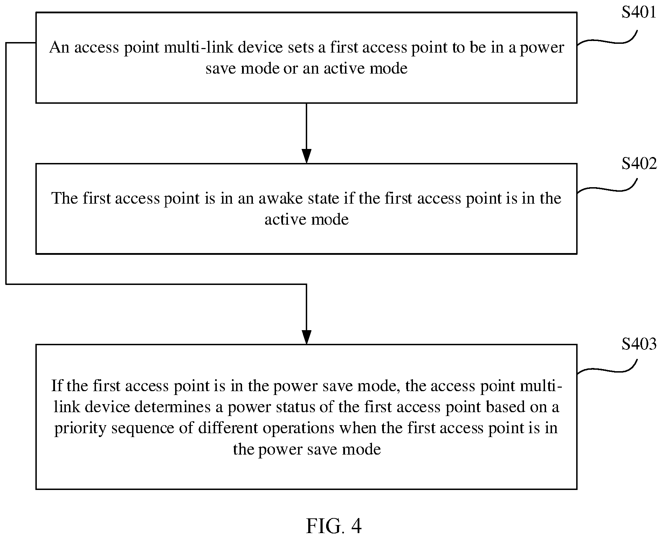

FIG. 4 shows a power state determining method according to an embodiment of this application. The method includes the following steps.

S401: An access point multi-link device (referred to as an AP MLD below) sets a first access point (referred to as an AP below) to be in a power save mode or an active mode.

S402: If the first AP is in an active mode, the first AP is in an awake state.

S403: If the first AP is in the power save mode, the AP MLD determines a power state of the first AP based on a priority sequence of different operations when the first AP is in the power save mode.

The operations include one or more of link disablement, an aperiodic wakeup request, and periodic target wakeup. For related content of the link disablement, refer to the following description of "Manner 1"; for related content of the aperiodic wakeup request, refer to the following description of "Manner 2"; and for related content of the periodic target wakeup, refer to the following description of "Manner 3".

Usually, the power state (power state) of the AP includes an awake (Awake) state or a doze (Doze) state. In the awake state, the first AP is allowed to perform receiving/sending, and in the doze state, the first AP is not allowed to perform receiving/sending.

In S402, in an optional example, if the first AP is in the active mode and an operation of the link disablement exists, the first AP may switch from the awake state to the doze state at a start time of the link disablement, and switch from the doze state to the awake state at an end time of the link disablement. That is, the first access point maintains the doze state during an effective period of the link disablement.

For another example, if the first AP is in the active mode, the first AP is in the awake state in both a service period corresponding to the periodic target wakeup and a period (non-service period) other than the service period corresponding to the periodic target wakeup. That is, if the first AP is in the active mode, even if the first AP is in the non-service period of the periodic target wakeup, the power state of the first AP is also in the awake state.

In S403, for example, if the first AP is in the power save mode, the first AP is in the doze state by default.

For another example, if the first AP is in the power save mode, the first AP may switch between the awake state and the doze state, and the power state of the first AP is the awake state or the doze state.

For another example, if the first AP is in the power save mode and receives one or more aperiodic wakeup requests, the first AP switches from the doze state to the awake state when receiving the aperiodic wakeup request, or after receiving a wakeup delay (Wakeup Delay) or a wakeup delay+short inter-frame space (short inter-frame space, SIFS) after receiving the aperiodic wakeup request, and switches from the awake state back to the doze state after setting More data to 0 in a corresponding affiliated STA (for example, the first STA) that sends the aperiodic wakeup request and a frame sequence exchange is successfully completed, or when the station that sends the aperiodic wakeup request switches to the doze state, or a channel is idle for more than specific duration. In this example, the first AP switches from the doze state to the awake state in response to the aperiodic wakeup request. The first AP may respond to the aperiodic wakeup request when receiving the aperiodic wakeup request, or the first AP may respond to the aperiodic wakeup request when receiving a wakeup delay after receiving the aperiodic wakeup request, or the first AP may respond to the aperiodic wakeup request when receiving (Wakeup Delay+ SIFS) after the aperiodic wakeup request. In addition, in this example, the first condition that is met when the first AP switches from the awake state to the doze state is that after the affiliated STA sets More Data to 0 and successfully completes the frame sequence exchange, or an affiliated STA that sends an aperiodic wakeup request switches to the doze state, or a channel is idle for more than first duration. The first duration is a positive number.

For another example, if the first AP is in the power save mode and an operation of the periodic target wakeup exists, the first AP switches from the doze state to the awake state at a start time of the periodic target wakeup, and switches from the awake state to the doze state at an end time of the periodic target wakeup. In a possible implementation, when the first AP sets up the target wakeup agreement (TWT Agreement), an operation of the periodic target wakeup may exist in the power save mode. In the TWT, the start time of the periodic target wakeup may be a start time of the TWT SP, and the end time of the periodic target wakeup may be an end time of the TWP SP, or a time when the TWT SP ends and a specific condition is met.

For another example, if the first AP is in the power save mode, and a plurality of operations in operations of the link disablement, the periodic target wakeup, or the aperiodic wakeup simultaneously exist, that is, when time of the plurality of operations overlaps, the first AP maintains the doze state in the effective period of the link disablement, that is, the operation of the link disablement has a highest priority. If the first AP is in the awake state before the start time of the link disablement, the first AP switches to the doze state at the start time of the link disablement. After the end time of the operation of the link disablement, the first AP may switch to the awake state in response to the periodic target wakeup or the aperiodic wakeup request.

For example, when the first AP is in the power save mode, other different operations may be performed. For example, the link disablement may further include periodic link disablement and aperiodic link disablement, and the periodic link disablement and the aperiodic link disablement have different priorities. For example, a priority of the aperiodic link disablement is higher than a priority of the periodic link disablement.

In still another example, a priority of the aperiodic link disablement is higher than a priority of the aperiodic wakeup request, and the priority of the aperiodic wakeup request is higher than a priority of the periodic link disablement.

In still another example, a priority of the aperiodic link disablement is higher than a priority of the periodic target wakeup, and the priority of the periodic target wakeup is higher than a priority of the periodic link disablement.

The AP MLD may determine the power state of the first AP based on a priority sequence of one or more operations when the first AP is in the power save mode. Correspondingly, a non-access point multi-link device (non-AP MLD) communicating with the AP MLD also determines a power state of the first AP based on a priority sequence of one or more operations when the first AP is in the power save mode. The non-AP MLD and the AP MLD determine a same power state of the first AP, to avoid unnecessary wakeup of a STA of the non-AP MLD, to avoid a waste of power and implementing power saving and normal communication. A process in which the non-AP MLD determines the power state of the first AP is similar to a process in which the AP MLD performs S401 to S403, and same content is not described again. Optionally, the non-AP MLD may determine, based on the power state of the first AP, the power state of the first STA associated with the first AP in the non-AP MLD. For example, the power state of the first STA is the same as the power state of the first AP, to implement power saving and normal communication.

In an implementation, the AP MLD or the non-AP MLD may determine the operation corresponding to the first AP in the following manner:

### Manner 1:

When a non-AP MLD is associated with an AP MLD, a plurality of links exist between the non-AP MLD and AP MLD. The non-AP MLD and AP MLD can negotiate with each other to map data services with different TIDs to different links and provide differentiated quality of service (quality of service, QoS). When no TID is mapped to a link of the non-AP MLD, the link is disabled (disablement), and the non-AP MLD is not allowed to transmit any frame on the link. When the AP MLD broadcasts a TID-to-link mapping element and disables a link, all non-AP MLDs and AP MLDs that have established the link do not allow any frame to be transmitted on the link. For ease of description, this case may be referred to as link disablement (link disablement) or access point link disablement (AP link disablement).

For example, when a link of the non-AP MLD has no mapping TID, the first AP is not in the link disablement state. When the AP MLD broadcasts a TID-to-link mapping element and disables a link, the first AP is in the link disablement state.

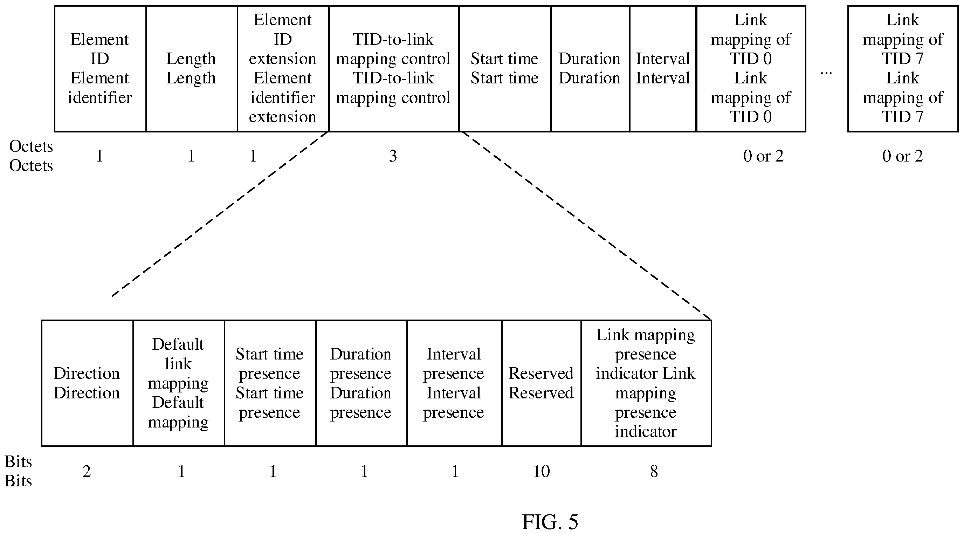

A frame structure of the TID-to-link mapping element is shown in FIG. 5, and includes an element identifier (Element ID) field (occupying 1 octet (octet)), a length (Length) field (occupying 1 octet), an element identifier extension (Element ID Extension) field (occupying 1 octet), a TID-to-link mapping control (TID-to-link Mapping Control) field (occupying 3 octets), a start time (Start Time) field, a duration (Duration) field, an interval (Interval) field, an optional link mapping (Link Mapping of TID 0) field of TID 0 (occupying 0 or 2 octets), ..., an optional link mapping (Link Mapping of TID 7) field of TID 7 (occupying 0 or 2 octets). The TID-to-link mapping control field includes a direction (Direction) field (occupying 2 bits (bits)), a default mapping (Default Link Mapping) field (occupying 1 bit), a start time presence (Start Time Presence) field (occupying 1 bit), a duration presence (Duration Presence) field (occupying 1 bit), an interval presence (Interval Presence) field (occupying 1 bit), a reserved (Reserved) field (occupying 10 bits), and a link mapping present indicator (Link Mapping Present Indicator) field. (occupying 8 bits).

For example, the direction field is set to 0 to indicate downlink, is set to 1 to indicate uplink, is set to 2 to indicate uplink and downlink, and is set to 3 indicate a reserved value; the default link mapping field is set to 1 to indicate default mapping, that is, all TIDs are mapped to all links; the start time presence field indicates whether the start time field is present; the duration presence field indicates whether the duration field is present; the interval presence field indicates whether the interval field is present; and the start time field indicates an effective time of TID-to-link mapping; and the duration field indicates duration of TID-to-link mapping the interval field indicates the interval between two consecutive durations of the TID-to-link mapping. When the interval is 0, it indicates that the TID-to-link mapping is the aperiodic link disablement. When the interval is not 0, it indicates that the TID-to-link mapping is a periodic link disablement. An n^{th} bit in the link mapping present indicator field indicates whether link mapping of TID #n field of a corresponding TID #n (for example, TID 0, ..., TID 7, that is, n is 0, ..., 7) is present. The link mapping of TID #n field indicates whether to map TID #n to the corresponding link. When the bit corresponding to TID #n is set to 1, it indicates that TID #n is mapped to the corresponding link.

### Manner 2:

The AP MLD may adjust the power management mode of the first AP, that is, may determine whether the first AP is in the power save mode or the active mode. In the power save mode, the first AP and the first STA (associated with the first AP in the non-AP MLD) may switch between the awake state and the doze state, and are allowed to wake up the peer end based on the aperiodic wakeup request. For example, when the first AP is in the power save mode, if downlink data is to be sent and the first link (between the first AP and the first STA) needs to be used for transmission, the first AP may autonomously switch to the awake state and send an aperiodic wakeup request to wake up the first STA. Similarly, the first STA may also autonomously switch to the awake state and send an aperiodic wakeup request to wake up the first AP. The first AP and the first STA may determine, based on a setting of a More Data field of an MPDU sent by the peer end and whether the first AP and the first STA have to-be-sent data to be sent to the peer end, when to switch back to the doze state. For example, the first AP and the first STA switch back to the doze state only when the first AP and the first STA set More Data fields of two adjacent MPDUs to 0.

Optionally, there are further the following possible implementations:

Option (Option) 1: Only the AP (for example, the first AP) is allowed to send a wakeup request to wake up a non-TWT member station, but the AP is not allowed to send an aperiodic wakeup request to wake up a TWT member station.

Option 2: The AP is allowed to send a wakeup request to wake up a non-TWT member station and an rTWT member station, but is not allowed to send an aperiodic wakeup request to wake up a non-rTWT TWT member station (that is, an individual TWT member station and a non-rTWT broadcast TWT member station).

Option 3: The AP MLD wakes up STAs on different links based on a traffic indication map (traffic indication map, TIM) element and a multi-link traffic indication element (Multi-link Traffic Indication element) in a Beacon frame on an active link (that is, the AP is in an active state). When the AP MLD needs to wake up a STA on a link, the AP in the power save mode on the corresponding link need to wake up until no data to be transmitted exists on the AP side and all associated STA sides, that is, More Data is set to 1 or the channel is idle for more than a preset time (for example, the first duration), and the AP based on the power save mode may switch back to the doze state. In the Option 3, a plurality of STAs on different links may be requested to be woken at a time. When the STA requests to wake up the AP, the AP needs to wake up. However, when the AP requests to wake up the STA, the STA may or may not wake up, which is determined by the STA. Optionally, when the AP MLD requests to wake up one or more STAs of a non-AP MLD, a new wakeup request (WakeUp Request) and a new wakeup response (WakeUp Response) frame may be defined to notify the AP end of whether a station on a corresponding link agrees to wake up. This can avoid unnecessary wakeup of the AP. For example, an AP 1 and a STA 1 on a link 1 are in the doze state, and an AP 2 and a STA 2 on a link 2 are in the awake state. The AP 2 may send, through the link 2, a newly defined wakeup request to request the STA 1 to wake up and/or notify the AP 1 that the STA 1 is to wake up. Correspondingly, the STA2 may send, through the link 2, a newly defined WakeUp Response to notify whether the STA 1 agrees to wake up. If the STA 1 agrees to wake up, the AP 1 may also wake up, to implement communication between the AP 1 and the STA 1. If the STA 1 does not agree to wake up, the AP 1 may maintain the doze state, to implement power saving of both the AP 1 and the STA 1.

### Manner 3

When the first AP is in the power save mode, a TWT agreement may be set up to set a periodic wakeup time period, to control the first AP to periodically wake up. The AP is in the awake state in the wakeup time period (the service period corresponding to the periodic target wakeup, for example, a TWT SP), and is in the doze state in a doze time period (a period other than the service period corresponding to the periodic target wakeup, for example, a non-TWT SP).

TWTs include an individual TWT (individual TWT), a broadcast TWT (broadcast TWT), and an rTWT. For example, when the first AP is in the TWT SP, there is an operation of the periodic target wakeup, and the first AP is in the service period corresponding to the periodic target wakeup. On the contrary, when the first AP is not in the TWT SP, there is no operation of the periodic target wakeup, and the first AP is in a period other than the service period corresponding to the periodic target wakeup.

In the individual TWT, each STA may separately set up a TWT agreement with the AP, and each STA may have a corresponding active time period and a corresponding doze time period.

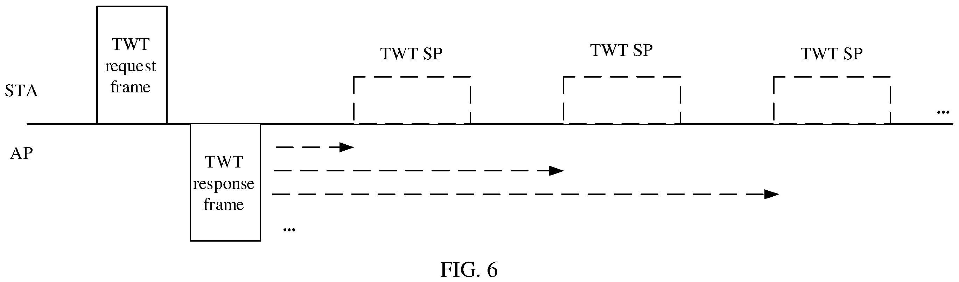

As shown in FIG. 6, the STA is used as a TWT requesting station (TWT requesting STA) to send a TWT request frame to the AP, to request to set an awake time; and the AP is used as a TWT responding station (TWT responding STA) to send a TWT responding frame to the TWT requesting STA. A TWT agreement is set up between the TWT requesting STA and the TWT responding STA. The TWT agreement may include one or more TWT SPs.

After the TWT agreement is reached, the TWT requesting STA and the TWT responding STA maintain the awake state in the negotiated TWT SP, to perform data receiving/sending. In addition to the TWT SP, the TWT requesting STA and/or the TWT responding STA may achieve power-saving by being doze.

It may be understood that the TWT requesting STA may alternatively be an AP, and the TWT responding STA is a STA.

In the broadcast TWT, a group of STAs may set up a TWT agreement with the AP. The group of STAs may correspond to a same wakeup time period and a same doze time period.

The AP may carry information about one or more broadcast TWTs in a beacon frame, and each broadcast TWT is represented by a broadcast TWT identifier (identifier, ID) and a MAC address of the AP. After receiving the beacon frame, if the STA intends to join the broadcast TWT, the STA may send a broadcast TWT setup request message to the AP, to join the broadcast TWT. During broadcast TWT setup, the STA needs to specify a broadcast TWT ID to request to join a specific broadcast TWT. After joining the broadcast TWT, the STA may wake up based on an SP indicated by a TWT parameter set, to communicate with the AP. It should be noted that, if the STA supports the broadcast TWT but does not explicitly join a broadcast TWT ID, the STA joins a broadcast TWT whose broadcast TWT ID=0 by default.

The TWT parameter set may indicate an occurrence period of a TWT SP and duration of each TWT SP, and may further indicate a life cycle of the broadcast TWT. The life cycle of the broadcast TWT is in a unit of a beacon frame interval, and indicates duration of the setup broadcast TWT.

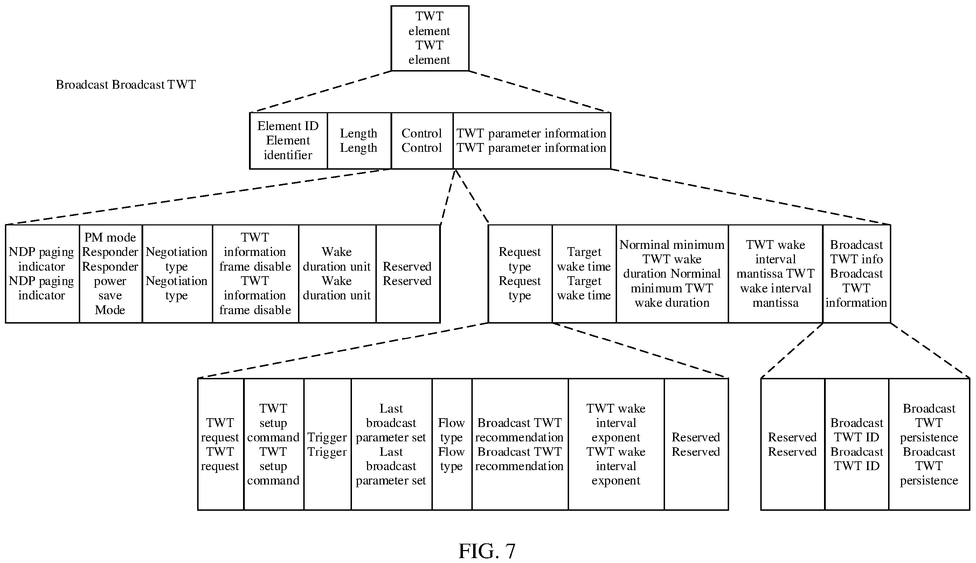

FIG. 7 shows a format of a broadcast TWT element, including an element ID field, a length (Length) field, a control field, and a TWT parameter information (TWT Parameter Information) field. The control field includes a neighbor discovery protocol (neighbor discovery protocol, NDP) paging indicator (NDP Paging Indicator) field, a responder power save mode (Responder PM mode) field, a negotiation type (Negotiation Type) field, a TWT information frame disable (TWT Information Frame Disable) field, a wake duration unit (Wake Duration Unit) field, and a reserved field. The TWT parameter information field includes a request type (Request Type) field, a target wake time (Target Wake Time) field, a nominal minimum TWT wake duration (Nominal Minimum TWT Wake Duration) field, a TWT wake interval mantissa (TWT Wake Interval Mantissa) field, and a broadcast TWT information (Broadcast TWT Info) field. The request type field includes a TWT request field, a TWT setup command (TWT Setup Command) field, a trigger (Trigger) field, a last broadcast parameter set (Last Broadcast Parameter Set) field, a flow type (Flow Type) field, a broadcast TWT recommendation (Broadcast TWT Recommendation) field, a TWT wake interval exponent (TWT Wake Interval Exponent) field, and a reserved field. The broadcast TWT info field includes a reserved field, a broadcast TWT ID field, and a broadcast TWT persistence (Broadcast TWT Persistence) field.

The rTWT is a broadcast TWT defined in 802.11be for transmission of a low-delay service. However, a main purpose of the TWT in the current protocol is to save power on a station side. Therefore, the 802.11ax protocol stipulates that an AP is not allowed to send data to a TWT member station outside a TWT SP. However, considering that the rTWT is used for low-delay transmission, in this embodiment of this application, the AP may be allowed to set More Data to 1, so that the station maintains the awake state when the TWT SP ends, to prevent the station from switching back to the doze state when the rTWT SP ends, which is unfavorable to transmission of the low-delay service. Similarly, the STA may also set More Data to 1 to enable the AP in the power save mode to remain in the awake state when the TWT SP ends, to prevent the AP in the power save mode from switching back to the doze state when the rTWT SP ends, which is unfavorable to transmission of a low-delay service. When the AP is in the power save mode, the AP sets the responder power save mode (Responder PM mode) field to 1. Optionally, one bit is added to the TWT element to indicate whether the member STA exchanges data outside the rTWT SP. When a member STA is allowed to exchange data outside the rTWT SP, if the member STA receives an MPDU with More Data set to 1, the member STA still needs to remain in the awake state even when the TWT SP ends, and can switch back to the doze state only when More Data is set to 0.

In an implementation, in S403, the AP MLD and/or the non-AP MLD may determine the power state of the first AP based on a priority sequence of different operations in the power save mode (that the first AP is in). When a plurality of operations conflict or are inconsistent, the power state of the first AP may be determined based on a priority sequence.

Example 1.1: The priority of the link disablement is higher than the priority of the aperiodic wakeup request.

In S403, when both the link disablement request and the aperiodic wakeup request exist, because the priority of the link disablement is high, the first AP is in the doze state in the effective period of the link disablement. In other words, because the priority of the link disablement is high, even if the aperiodic wakeup request is received, the first AP still maintains the doze state during the link disablement.

Optionally, for transmission in a case of the aperiodic wakeup request, if transmission is interrupted because of the link disablement, the interrupted transmission needs to continue after the link disablement ends.

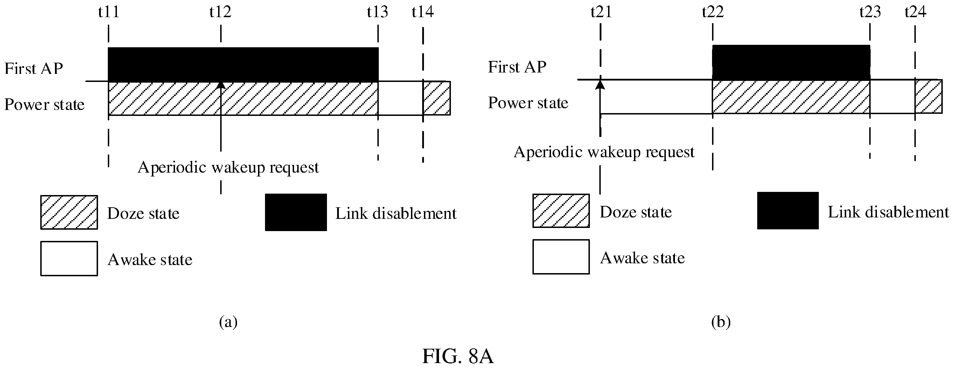

In a possible scenario 1, as shown in (a) in FIG. 8A, a start time t11 of the link disablement is earlier than or equal to a start time t12 of the aperiodic wakeup request, and the first access point is in the doze state in the effective period (a time period from t11 to t13) of the link disablement. The start time of the aperiodic wakeup request is a time of responding to the aperiodic wakeup request. For the AP MLD, the time of responding to the aperiodic wakeup request may be a time at which the aperiodic wakeup request is received, or a period of time (for example, a wakeup delay or (Wakeup Delay+SIFS)) after the aperiodic wakeup request is received. This is merely an example, and does not constitute a limitation. For the non-AP MLD, the time of responding to the aperiodic wakeup request may be a time at which the aperiodic wakeup request is sent, or a period of time (for example, a wakeup delay or (Wakeup Delay+SIFS)) after the aperiodic wakeup request is sent. This is merely an example, and does not constitute a limitation.

Optionally, in (a) in 8A, an end time t13 of the link disablement is later than or equal to the start time t12 of the aperiodic wakeup request, that is, the link disablement is earlier than the aperiodic wakeup request. When the first AP receives the aperiodic wakeup request in the effective period of the link disablement at t12, the first AP maintains the doze state in the effective period of the link disablement.

If the first condition is not met after the link disablement, the first access point switches from the doze state to the awake state after the end time t13 of the link disablement, until the first condition is met at t14, and the first access point switches from the awake state to the doze state at t14. It is simply understood that the time t14 that meets the first condition is an end time of the aperiodic wakeup request. Certainly, t14 herein is merely an example of the end time of the aperiodic wakeup request, and the end time of the aperiodic wakeup request may also be a period of time after the first condition is met (for example, second duration, where the second duration is a positive number, and a value of the second duration is not limited herein).

For example, the first condition may include but is not limited to the following: fifth indication information (for example, More Data) is set to 0 (after the frame sequence exchange is successfully completed), the station that sends an aperiodic wakeup request is switched to the doze state, all associated stations of the first AP are in the doze state, duration in which the first channel is in an idle state exceeds the first duration, the fifth indication information to 0 (after the frame sequence exchange is successfully completed) and a period is not the service period corresponding to the periodic target wakeup. The station that sends the aperiodic wakeup request switches to the doze state and a period is not the service period corresponding to the periodic target wakeup, all associated stations of the first AP are in the doze state and a period is not the service period corresponding to the periodic target wakeup, or duration in which the first channel is in the idle state exceeds the first duration and a period is not the service period corresponding to the periodic target wakeup, or the like.

Optionally, if no operation is performed before t11, the first AP may be in a default doze state (not shown in the figure) in the power save mode.

It may be understood that, after t14, a corresponding response may be made based on different operations, to determine the power state of the first AP. If a plurality of operations exist at t14, the power state of the first AP may be determined based on a priority sequence of the plurality of operations. Similar parts are not described herein again.

In a possible scenario 2, as shown in (b) in FIG. 8A, a start time t21 of the aperiodic wakeup request is earlier than a start time t22 of the link disablement. That is, the first access point switches to the awake state at the start time t21 of the aperiodic wakeup request, and maintains the awake state before the start time t22 of the link disablement, and the first access point switches to the doze state at the start time t22 of the link disablement, and maintains the doze state before an end time t23 of the link disablement. The first access point switches to the awake state at the end time t23 of the link disablement.

If an end time t24 of the aperiodic wakeup request (for example, the time when the first condition is met) is later than the end time t23 of the link disablement, the first access point maintains the awake state before the end time t24 of the aperiodic wakeup request, and the first access point switches to the doze state at the end time t24 of the aperiodic wakeup request.

Optionally, if the end time of the aperiodic wakeup request is earlier than the start time of the link disablement, the first access point maintains the awake state in the effective period of the aperiodic wakeup request, and maintains the doze state in the effective period of the link disablement.

It may be understood that, after t24, a corresponding response may be made based on different operations, to determine the power state of the first AP. If a plurality of operations exist at t24, the power state of the first AP may be determined based on a priority sequence of the plurality of operations. Similar parts are not described herein again.

Example 1.2: The priority of the link disablement is higher than the priority of the periodic target wakeup.

In S403, when the priority of the link disablement and the priority of the periodic target wakeup coexist, because the priority of the link disablement is high, the first AP is in the doze state in the effective period of the link disablement. In other words, because the priority of the link disablement is high, even if the service period corresponding to the periodic target wakeup (which is described by using a TWT SP herein) is entered (or is to be entered), the first AP still maintains the doze state.

Optionally, the rTWT SP is allowed to be prolonged. For transmission in a case of the rTWT SP, if transmission is interrupted due to link disablement, the interrupted transmission may continue after the link disablement ends. For example, when to-be-transmitted data still exists between the first AP and the first STA, the rTWT SP may be prolonged, to ensure accurate communication between the transmit end and the receive end.

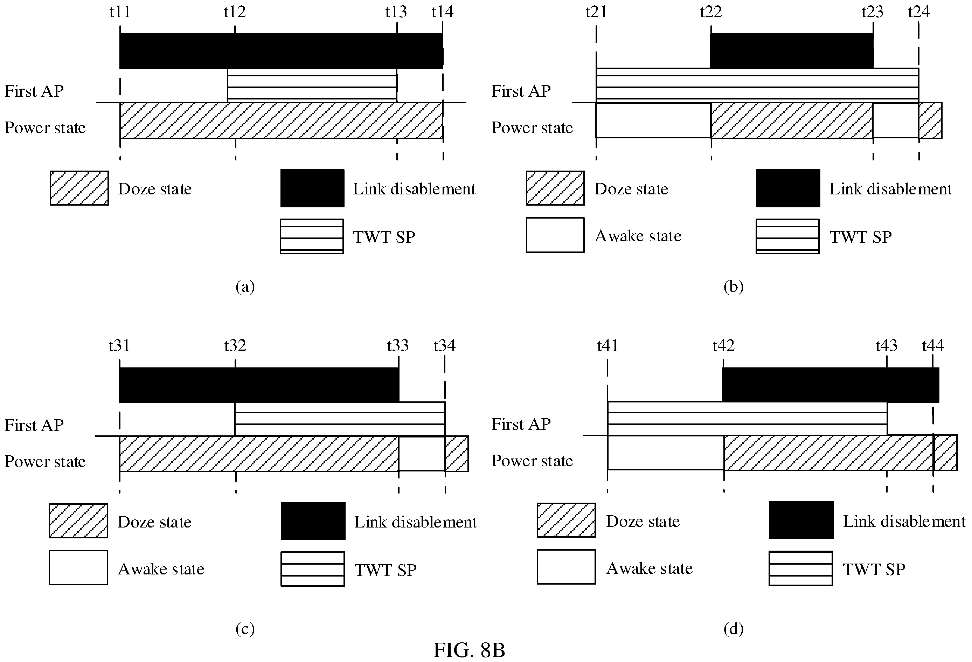

In a possible scenario 1, as shown in (a) in FIG. 8B, a start time t11 of the link disablement is earlier than or equal to a start time t12 of the TWT SP, an end time t13 of the operation of the link disablement is later than or equal to an end time t14 of the TWT SP (for example, the end time of the service period), and the first AP is in the doze state in the effective period (a time period from t11 to t14) of the link disablement. Optionally, if no TWT SP exists before the link disablement, the first AP may also maintain the doze state (not shown in the figure) before the link disablement (that is, in a period other than the TWT SP or a non-TWT SP). If no TWT SP exists after the link disablement, the first AP may still maintain the doze state (not shown in the figure) after the link disablement (that is, in a period other than the TWT SP or a non-TWT SP).

It may be understood that, after t14, a corresponding response may be made based on different operations, to determine the power state of the first AP. If a plurality of operations exist at t14, the power state of the first AP may be determined based on a priority sequence of the plurality of operations. Similar parts are not described herein again.

In a possible scenario 2, as shown in (b) in FIG. 8B, a start time t21 of the TWT SP is earlier than a start time t22 of the link disablement, and an end time t23 of the TWT SP is later than an end time t24 of the link disablement. The first AP switches to the awake state at the start time t21 of the TWT SP, and maintains the awake state before the start time t22 of the link disablement, and the first AP switches to the doze state at the start time t22 of the link disablement, in addition, the first AP maintains the doze state before the end time t23 of the link disablement, switches to the awake state at the end time t23 of the link disablement, and maintains the awake state before the end time t24 of the TWT SP. The first AP switches to the doze state at the end time t24 of the TWT SP.

It may be understood that, after t24, a corresponding response may be made based on different operations, to determine the power state of the first AP. If a plurality of operations exist at t24, the power state of the first AP may be determined based on a priority sequence of the plurality of operations. Similar parts are not described herein again.

In a possible scenario 3, as shown in (c) in FIG. 8B, a start time t31 at which the link disablement is earlier than a start time t32 of the TWT SP, and an end time t33 of the link disablement is earlier than an end time t34 of the TWT SP, that is, the link disablement earlier than the start time of the TWT SP and earlier than the end time of the TWT SP, and the first AP is in the doze state in the effective period of the link disablement, the first AP switches to the awake state at the end time t33 of the link disablement, and maintains the awake state before the end time t34 of the TWT SP. The first AP switches to the doze state at the end time t34 of the TWT SP.

It may be understood that, after t34, a corresponding response may be made based on different operations, to determine the power state of the first AP. If a plurality of operations exist at t34, the power state of the first AP may be determined based on a priority sequence of the plurality of operations. Similar parts are not described herein again.

In a possible scenario 4, as shown in (d) in FIG. 8B, a start time t41 of the TWT SP is earlier than a start time t42 of the link disablement, and an end time t43 of the TWT SP is earlier than an end time t44 of the link disablement, that is, the TWT SP is earlier than the link disablement start time and earlier than the end time of the link disablement. The first AP switches to the awake state at the start time t41 of the TWT SP, in addition, the first AP maintains the awake state before the start time t42 of the link disablement, switches to the doze state at the start time t42 of the link disablement, and maintains the doze state before the end time t44 of the link disablement.

It may be understood that, after t44, a corresponding response may be made based on different operations, to determine the power state of the first AP. If a plurality of operations exist at t44, the power state of the first AP may be determined based on a priority sequence of the plurality of operations. Similar parts are not described herein again.

Example 1.3: The priority of the aperiodic wakeup request is higher than the priority of the periodic target wakeup.

In S403, when both the aperiodic wakeup request and the periodic target wakeup exist, because the aperiodic wakeup request has a high priority, the first AP is in the awake state in an effective period of the aperiodic wakeup request.

For example, in a period other than the service period corresponding to the periodic wakeup request, when the AP MLD receives the aperiodic wakeup request or the non-AP MLD sends the aperiodic wakeup request, the first AP switches to the awake state in response to the aperiodic wakeup request. Optionally, the first AP may maintain the awake state before the first condition is met, and switch back to the doze state when the first condition is met.

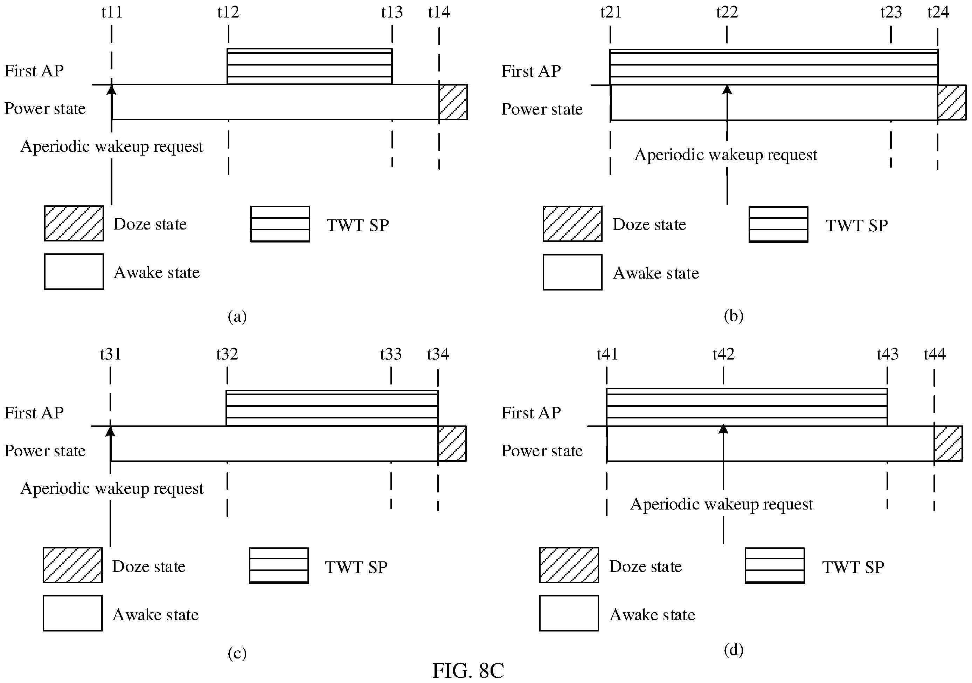

In a possible scenario 1, as shown in (a) in FIG. 8C, a start time t11 of the aperiodic wakeup request is earlier than or equal to a start time t12 of the TWT SP, the end time t13 of the aperiodic wakeup request is later than or equal to the end time t14 of the TWT SP, and the first AP is in the awake state in an effective period of the aperiodic wakeup request. Optionally, if no TWT SP exists before the aperiodic wakeup request, the first AP may be in the doze state (not shown in the figure) before the start time t11 of the aperiodic wakeup request. If no TWT SP exists after the aperiodic wakeup request, the first AP may be in the doze state after the end time t14 of the aperiodic wakeup request.

It may be understood that, after t14, a corresponding response may be made based on different operations, to determine the power state of the first AP. If a plurality of operations exist at t14, the power state of the first AP may be determined based on a priority sequence of the plurality of operations. Similar parts are not described herein again.

In a possible scenario 2, as shown in (b) in FIG. 8C, a start time t21 of the TWT SP is earlier than a start time t22 of the aperiodic wakeup, an end time t23 of the TWT SP is later than an end time t24 of the aperiodic wakeup, and the first AP is in the awake state in the TWT SP. Optionally, the first AP maintains the doze state before a start time of the TWT SP and/or after an end time of the TWT SP.

It may be understood that, after t24, a corresponding response may be made based on different operations, to determine the power state of the first AP. If a plurality of operations exist at t24, the power state of the first AP may be determined based on a priority sequence of the plurality of operations. Similar parts are not described herein again.

In a possible scenario 3, as shown in (c) in FIG. 8C, a start time t31 of the aperiodic wakeup request is earlier than a start time t32 of the TWT SP, and the end time t33 of the aperiodic wakeup is earlier than the end time t34 of the TWT SP. That is, the aperiodic wakeup request starts earlier than the TWT SP and ends earlier than the TWT SP. The first AP switches to the awake state at the start time t31 of the aperiodic wakeup request, the first AP maintains the awake state before the end time of the TWT SP, and switches to the doze state at the end time t34 of the TWT SP.

It may be understood that, after t34, a corresponding response may be made based on different operations, to determine the power state of the first AP. If a plurality of operations exist at t34, the power state of the first AP may be determined based on a priority sequence of the plurality of operations. Similar parts are not described herein again.

In a possible scenario 4, as shown in (c) in FIG. 8C, a start time t41 of the TWT SP is earlier than a start time t42 of the aperiodic wakeup request, and the end time t43 of the TWT SP is earlier than the end time t44 of the aperiodic wakeup request. That is, the TWT SP is earlier than the start time of the aperiodic wakeup request and earlier than the end time of the aperiodic wakeup request. The first AP switches to the awake state at the start time t41 of the TWT SP, in addition, the first AP maintains the awake state before the end time t44 of the aperiodic wakeup request, and switches to the doze state at the end time t44 of the aperiodic wakeup request.

It may be understood that, after t44, a corresponding response may be made based on different operations, to determine the power state of the first AP. If a plurality of operations exist at t44, the power state of the first AP may be determined based on a priority sequence of the plurality of operations. Similar parts are not described herein again.

Example 1.4: The priority of the link disablement is higher than the priority of the aperiodic wakeup request, and the priority of the aperiodic wakeup request is higher than the priority of the periodic target wakeup.

In S403, when operations of the link disablement, the aperiodic wakeup request, and the periodic target wakeup exist simultaneously, because the priority of the link disablement is high, the first AP is in the doze state in the effective period of the link disablement.

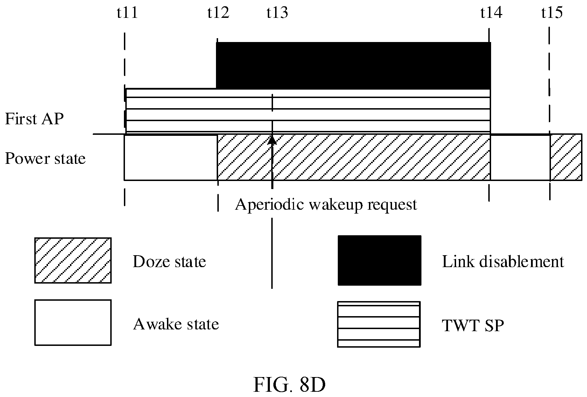

If operations of the link disablement, the aperiodic wakeup request, and the periodic target wakeup simultaneously exist in a time period, because the operation of the link disablement has a highest priority, the first access point is in the doze state in the effective period of the disabled link of the access point. For example, as shown in FIG. 8D, the TWT SP starts at t11 and ends at t14, the link disablement starts at t12 and ends at t14, the aperiodic wakeup request starts at t13 and ends at t15, and the first AP switches to the awake state at the start time t11 of the TWT SP, switches to the doze state at the start time t12 of the link disablement, and switches to the awake state at the end time t14 of the link disablement. The first AP maintains the awake state before the end time t15 of the aperiodic wakeup request, and switches to the doze state at t15, namely, the end time t15 of the aperiodic wakeup request.

It may be understood that, after t15, a corresponding response may be made based on different operations, to determine the power state of the first AP. If a plurality of operations exist at t15, the power state of the first AP may be determined based on a priority sequence of the plurality of operations. Similar parts are not described herein again.

If operations of the link disablement and the aperiodic wakeup request (or the periodic target wakeup) simultaneously exist in a time period, because the link disablement has a highest priority, the first AP is in the doze state in an effective period of the disabled link of the access point.

If the operations of the aperiodic wakeup request and the periodic target wakeup simultaneously exist in a time period, because the aperiodic wakeup request has a highest priority, the first AP is in the awake state in the effective period of the aperiodic wakeup request. For example, when the link disablement does not exist, in a period other than the service period corresponding to the periodic target wakeup, when the AP MLD receives the aperiodic wakeup request or the non-AP MLD sends the aperiodic wakeup request, the first AP switches to the awake state in response to the aperiodic wakeup request.

If the operation of the link disablement exists in a time period, the first AP is in the doze state in the effective period of the link disablement.

If the operation of the aperiodic wakeup request exists in a time period, the first AP is in the awake state in the effective period of the aperiodic wakeup request.

If the operation of the periodic target wakeup exists in a time period, the first AP is in the awake state in the effective period of the periodic target wakeup.

Example 1.5: the priority of the aperiodic link disablement is higher than the priority of the aperiodic wakeup request, and the priority of the aperiodic wakeup request is higher than the priority of the periodic link disablement. For Example 1.5, refer to Example 1.1. Similar parts are not described again.

In S403, when both operations of the aperiodic link disablement and the aperiodic wakeup request exist, for example, when the first AP is in the effective period of the aperiodic link disablement, and the AP MLD receives the aperiodic wakeup request or the non-AP MLD sends the aperiodic wakeup request, the first AP maintains a doze state in the effective period of the aperiodic link disablement; and/or
in S403, when both operations of an aperiodic wakeup request and a periodic link disablement exist, for example, when the first AP is in an effective period of the periodic link disablement, and the first AP MLD receives an aperiodic wakeup request or the non-AP MLD sends an aperiodic wakeup request, the first AP switches to the awake state in response to the aperiodic wakeup request. Optionally, the first AP switches back to the doze state when the first condition is met.

If operations of the aperiodic link disablement and the aperiodic wakeup request simultaneously exist in a time period, because the aperiodic link disablement has a highest priority, the first AP may be in the doze state in the effective period of the aperiodic link disablement.

If operations of the aperiodic wakeup request and the periodic link disablement simultaneously exist in a time period, because the aperiodic wakeup request has a highest priority, the first AP may be in the awake state in the effective period of the aperiodic wakeup request.

If the operation of the aperiodic link disablement exists in a time period, the first AP is in the doze state in the effective period of the aperiodic link disablement.

If the operation of the aperiodic wakeup request exists in a time period, the first AP is in the awake state in the effective period of the aperiodic wakeup request.

If the operation of the periodic link disablement exists in a time period, the first AP is in the doze state in the effective period of the periodic link disablement.

Example 1.6: The priority of the aperiodic link disablement is higher than the priority of the periodic target wakeup, and the priority of the periodic target wakeup is higher than the priority of the periodic link disablement. For Example 1.5, refer to Example 1.2. Similar parts are not described again.

In S403, when both operations of the aperiodic link disablement and the periodic target wakeup exist, for example, when the operation of the periodic target wakeup exists in the first AP in the effective period of the aperiodic link disablement, the first AP maintains the doze state in the effective period of the aperiodic link disablement; and/or
in S403, when both operations of the periodic target wakeup and the periodic link disablement exist, for example, when the first AP performs an operation of the periodic target wakeup in the effective period of the periodic link disablement, the first AP switches to the awake state at the start time of the periodic target wakeup, and switches to the doze state at the end time of the periodic target wakeup.

If operations of the aperiodic link disablement and the periodic target wakeup simultaneously exist in a time period, because the aperiodic link disablement has a highest priority, the first AP is in the doze state in the effective period of the aperiodic link disablement.

If operations of the periodic target wakeup and the periodic link disablement simultaneously exist in a time period, because the periodic target wakeup has a highest priority, the first AP is in the awake state in the effective period of the periodic target wakeup.

If the operation of the aperiodic link disablement exists in a time period, the first AP is in the doze state in the effective period of the aperiodic link disablement.

If the operation of the periodic target wakeup exists in a time period, the first AP is in the awake state in the effective period of the periodic target wakeup.

If the operation of the periodic link disablement exists in a time period, the first AP is in the doze state in the effective period of the periodic link disablement.

Example 1.7: The priority of the aperiodic link disablement is higher than the priority of the aperiodic wakeup request, the priority of the aperiodic wakeup request is higher than the priority of the periodic target wakeup, and the priority of the periodic target wakeup is higher than the priority of the periodic link disablement. For Example 1.7, refer to Example 1.1 to Example 1.6. Similar parts are not described again.

It may be understood that, in a case of no conflict, the foregoing examples may be used in combination.

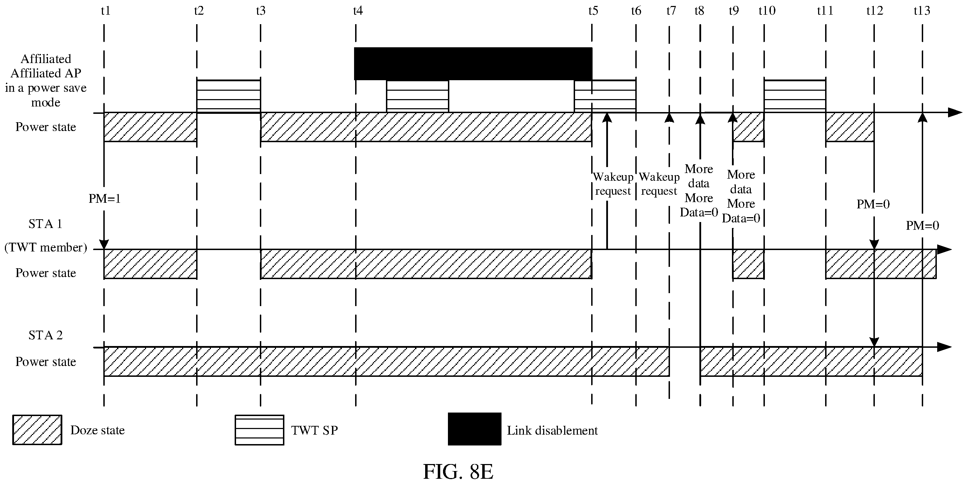

FIG. 8E is used as an example for description. An affiliated AP is in the power save mode, the STA 1 and the STA 2 respectively belong to different non-AP MLDs, and the STA 1 is a member STA of a TWT. In FIG. 8E, AP Link disablement has the highest priority. At a moment t1, the affiliated AP is in the power save mode, and the affiliated AP sets power management (PM) to 1 and notifies all associated STAs through broadcasting. That is, the affiliated AP is in the power save mode. In a time period from t1 to t2, the affiliated AP is in the doze state. If the TWT agreement is set up, the affiliated AP and the corresponding member STA wake up when the TWT SP starts (for example, t2) and keeps awake until the TWT SP ends (for example, t3), and the affiliated AP switches back to the doze state at a moment t3. A non-member STA (for example, the STA 2) may wake up during the TWT SP, or may maintain the doze state during the TWT SP. From t4 to t5 at which the AP link disablement ends, the AP link disablement has the highest priority. Therefore, the affiliated AP maintains the doze state in this period. If one or more wakeup requests are received, the affiliated AP also wakes up until all non-AP MLDs that send wakeup requests set a More Data bit in a MAC header of a frame sent on the link to 0, and then switches back to the doze state. Alternatively, when a channel is continuously idle for a specific value (for example, the first duration), the affiliated AP switches back to the doze state. For example, at a moment t5, the affiliated AP switches back to the awake state. Because a wakeup request sent by the STA 1 is received during the TWT SP (before the moment t6), the affiliated AP maintains the awake state at the moment t6. At t7, the AP MLD receives the wakeup request sent on the other link. The indication information that is sent by the STA 2 and that is More Data=0 is received at a moment t8, and the indication information that is sent by the STA 1 and that is More Data=0 is received at a moment t9. The affiliated AP determines that a STA that previously sends the wakeup request. That is, neither the STA 1 nor the STA 2 has to-be-transmitted data. After completing frame sequence exchange at the moment t9, the affiliated AP switches to the doze state until being in the TWT SP at t10 to t11, the affiliated AP switches back from the doze state to the awake state, and maintains the awake state until t11. At a moment t11, the affiliated AP switches back to the doze state. At t12, the affiliated AP sets power management (PM) to 1 and notifies all associated STAs through broadcasting. That is, the affiliated AP is in the active mode. At the moment t13, the STA 2 notifies the affiliated AP to switch to the active mode. The dashed line indicates that a corresponding frame (Frame) is sent on another link. That is, at a moment t7, the STA 2 sends a corresponding frame on another link in the active mode.

In an implementation, after adjusting the power management mode of the first AP, the AP MLD may send the first PPDU. The first PPDU carries first indication information. The first indication information indicates the power management mode that the first AP is in. Correspondingly, the non-AP MLD may receive the first PPDU, and determine, based on the first indication information carried in the first PPDU, the power management mode that the first AP is in.

Optionally, the first indication information is a power management field, and the power management field occupies 1 bit. When the power management field is a third value (for example, the 1 bit is 1 or 0), the power management field indicates that the first AP is in the power save mode. When the power management field is a fourth value (for example, the 1 bit is 0 or 1), the power management field indicates that the first AP is in an active mode.

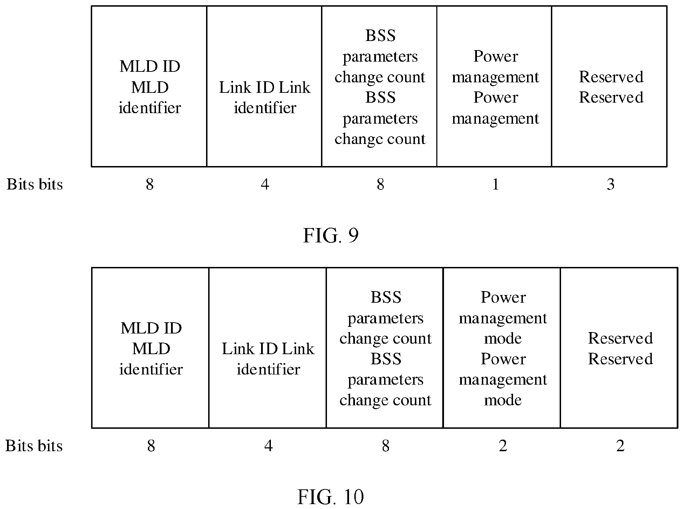

For example, the AP MLD may indicate, by using a 1-bit power management (Power Management) field in a multi-link device parameter (MLD parameters) field in an RNR element in a beacon frame sent by each affiliated AP, a power management mode that the corresponding affiliated AP is in. A format of the MLD parameters field may be shown in FIG. 9, and includes an MLD ID field (occupying 8 bits), a link identifier (Link ID) field (occupying 4 bits), a BSS parameters change counter (BSS Parameters Change Count) field (occupying 8 bits), a power management (Power Management) field (occupying 1 bit), and a reserved field (occupying 3 bits). When the power management field is set to 1 (or 0), it indicates that the corresponding AP is in the power save mode. When the power management field is set to 1 (or 1), it indicates that the corresponding AP is in the active mode.

Optionally, the first indication information is a power management mode field, and the power management mode field occupies 2 bits. When the power management mode field is a fifth value (for example, 2 bits are 00), the power management mode field indicates that the first AP is in an active mode. When the power management mode field is a sixth value (for example, 2 bits are 10), the power management mode field indicates that the first AP is in the power save mode. When the power management mode field is a seventh value (for example, 2 bits are 11), the power management mode field indicates that the first AP is in the doze mode (Sleep mode). When the power management mode field is an eighth value (for example, 2 bits are 01), there is a reserved value.

For example, the AP MLD may use a 2-bit power management mode (Power Management Mode) field in an MLD parameters field in the RNR element to indicate a power management mode in which a corresponding affiliated AP is in. A format of the MLD parameters field may be shown in FIG. 10, and includes an MLD ID field (occupying 8 bits), a link ID field (occupying 4 bits), a BSS parameters change count field (occupying 8 bits), a power management mode field (occupying 2 bits), and a reserved field (occupying 2 bits). When the power management mode field is set to 00, it indicates that the corresponding AP is in an active mode; when the power management mode field is set to 10, it indicates the power save mode; and when the power management mode field is set to 11, it indicates the doze mode. In the doze mode, the first AP is in the doze state and is not allowed to be woken up based on an aperiodic wakeup request. The power states of the first AP in the doze mode and the link disablement are similar.

In an implementation, the AP MLD may further send a power save multi-link element. The power save multi-link element includes a wakeup delay field and/or a start time field of entering the power save mode, the wakeup delay field indicates a time required for switching the first AP from the doze state to the awake state, and the start time field indicates a time at which the first AP enters the power save mode. Herein, the AP MLD may notify, by using the power save multi-link element, another AP or a non-AP of information about when the first AP enters the power save mode. Correspondingly, the non-AP MLD may receive the power save multi-link element, and determine, based on the wakeup delay field and/or the start time field included in the power save multi-link element, when the first AP enters the power save mode.

The power save multi-link element (Power Save Multi-link element) may be used as a multi-link element (Multi-link element), and the multi-link element carries MLD device information and information about a STA/AP in the MLD device. Optionally, the power save multi-link element may be carried in a beacon frame.

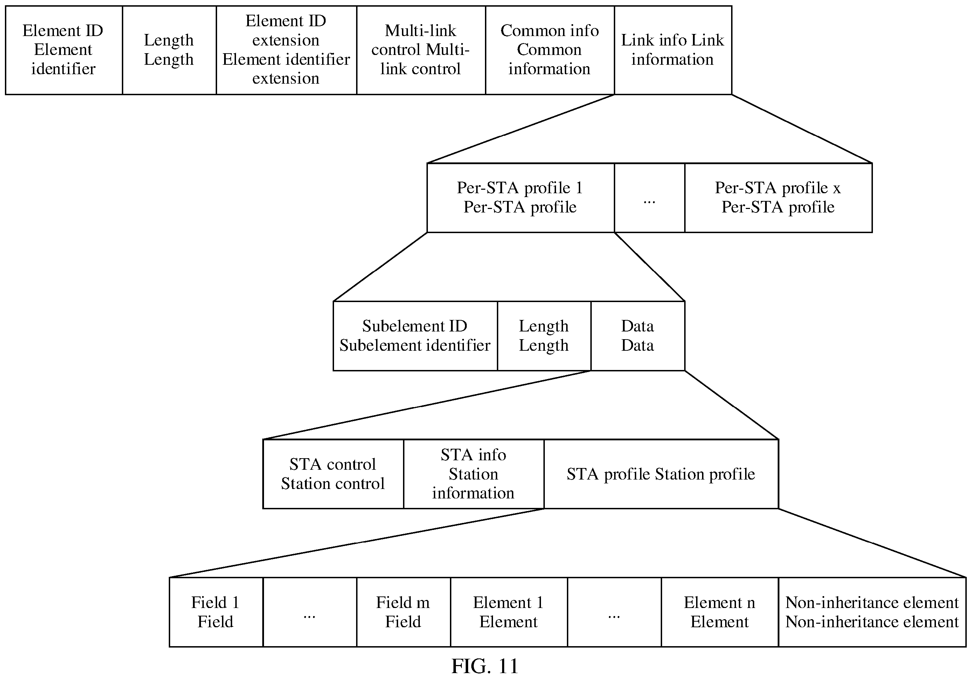

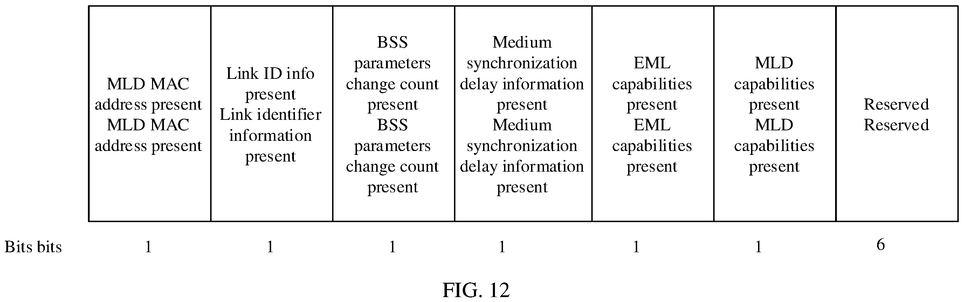

In a related technology, a frame structure of a multi-link element is shown in FIG. 11, and includes an element ID field, a length field, an element ID extension field, a multi-link control (Multi-Link Control) field, a common information (Common Info) field, and a link information (Link Info) field. The Common Info field carries common information of a plurality of stations in the MLD and information of the MLD. The link info field carries information about a station on each link in the MLD, and includes one or more per-STA profile (Per-STA Profile) fields. The per-STA profile field includes a subelement identifier (Subelement ID) field, a length field, and a data (Data) field. The data field includes a station control (STA Control) field, a station information (STA Info) field, and a station profile (STA Profile) field. The STA profile field includes one or more fields (fields), one or more elements (Elements), and a non-inheritance element (Non-Inheritance Element) field. The multi-link control field carries a type of the multi-link element (for example, two variants: a basic variant (Basic variant) and a probe request variant (Probe Request variant) defined in a current protocol, or another type) and a presence bitmap (Presence Bitmap) field that indicates which fields are not present. A format of the presence bitmap field may be shown in FIG. 12, and includes an MLD MAC address present (MLD MAC Address Present) field (occupying 1 bit), a link identifier information present (Link ID Info Present) field (occupying 1 bit), a BSS parameters change count present (BSS Parameters Change Count Present) field (occupying 1 bit), a medium synchronization delay information present (Medium Synchronization Delay Information Present) field (occupying 1 bit), an enhance multi-link (enhance multi-link, EML) capabilities present (EML Capabilities Present) field (occupying 1 bit), and an MLD capabilities present (MLD Capabilities Present) field (occupying 1 bit), and a reserved field (occupying 6 bits).

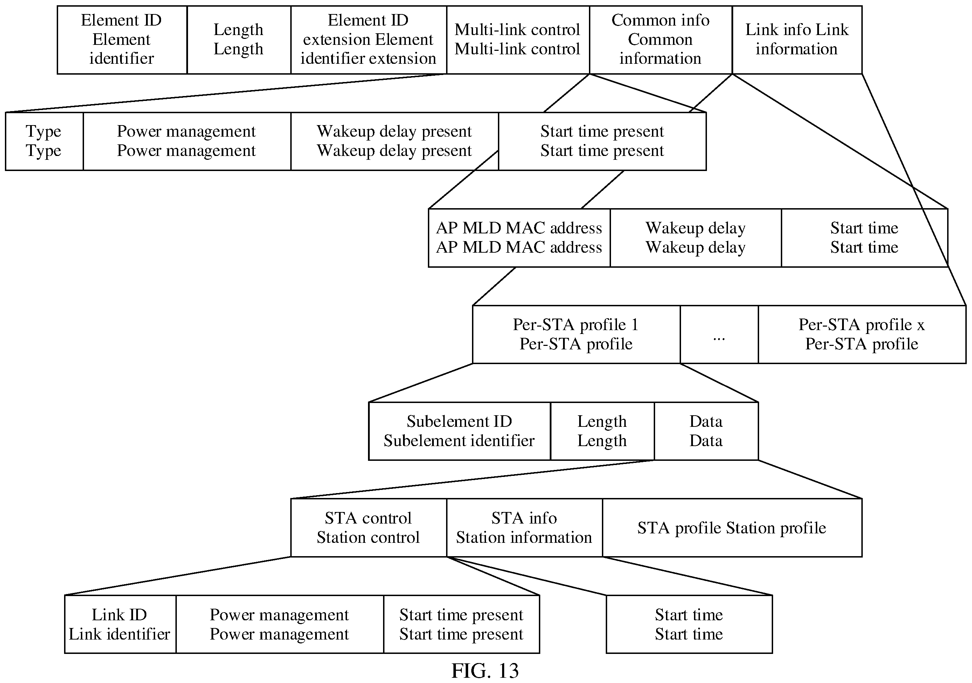

FIG. 13 is a diagram of a frame structure of a power save multi-link element. The frame structure includes an element ID field, a Length field, an element ID extension field, a multi-link control field, a common Info field, and a link Info field. The multi-link control field includes a type (Type) field, a power management field, a wakeup delay present (Wakeup Delay Present) field, and a start time present (Start Time Present) field. The type field indicates that the multi-link element is the power save multi-link element. When the power management field is set to 1, it indicates that the current AP has entered or is to enter the power save mode. When the power management field is set to 0, it indicates that the current AP is in an active mode. The wakeup delay present field indicates whether the wakeup delay field is present, and the start time present field indicates whether the start time field is present. The common Info field includes an AP MLD MAC address field, a wakeup delay field, and a start time field. The AP MLD MAC address field indicates a MAC address of an AP MLD. The wakeup delay field indicates a time required for switching the AP from the doze state to a wake state. The start time field indicates a start time of entering a power save mode, or may indicate a remaining time for entering the power save mode, or may indicate, in a unit of a target beacon transmission time (Target beacon transmission Time, TBTT), a quantity of TBTTs after which the AP enters the power save mode. The link info field carries information about a station on each link in the MLD, and includes one or more per-STA profile fields. The per-STA profile field includes a subelement ID field, a length field, and a data field. The data field includes a STA control field, a STA info field, and a STA profile field. The STA control field of the per-STA profile field includes a link ID field, a power management field, and a start time present field. The STA info field of the per-STA profile field may include a start time field.

In an implementation, if the first AP is in the power save mode, the AP MLD may further send a second PPDU. The second PPDU carries a media access control header field, the media access control header carries second indication information, and the second indication information indicates that the first AP is in the power save mode. Correspondingly, the non-AP MLD may receive the second PPDU, and determine, based on the second indication information carried in the media access control header, that the first AP is in the power save mode. For example, the second indication information is a power management field, and a bit of the Power Management field is set to 1 to indicate that the first AP is in the power save mode. In this implementation, when the affiliated AP is in the power save mode, optionally, a bit of a power management field in a media access control (MAC Header) header of a frame sent by the AP may be set to 1, to notify a receiver (another AP or a non-AP) or the first AP that receives the frame that the frame is in the power save mode. A frame type is not limited herein.

In an implementation, the non-AP MLD or the another AP MLD may further send the third PPDU. Correspondingly, the AP MLD may further receive a third PPDU. The third PPDU carries third indication information, and the third indication information indicates that the first STA (for example, the first STA of the non-AP MLD) or the second AP (for example, the second AP of another AP MLD) supports the power save operation of the first AP, or the third indication information indicates that the first STA or the second AP does not support the power save operation of the first AP. For example, capability indication information indicating whether the AP MLD is supported to perform power saving is added to a basic multi-link element (Basic Multi-link element). For example, an AP MLD power save support bit is added. When the bit of the AP MLD power save support is set to 1, it indicates that the non-AP MLD supports the AP MLD to perform a power save operation, that is, supports the affiliated AP to enter the power save mode; and when the bit of the AP MLD power save support is set to 0, it indicates that the non-AP MLD does not support the AP MLD to perform the power save operation. For the basic multi-link element, refer to FIG. 12. Similar parts are not described again.

In an implementation, the first AP in the power save mode is not allowed to send one or more of a beacon (Beacon) frame, a probe response (Probe Response) frame, an association response ((re)association response) frame, a multicast data frame, or a multicast management frame.

The first AP is not allowed to send a beacon frame, and may not be allowed to reply with a probe response frame and a (re)association response frame, so that a legacy station (legacy STA) can be prevented from being associated. The legacy station is a STA that does not support the affiliated AP (that is, the first AP) of the AP MLD to work in a power save mode or a non-AP MLD.

Optionally, to assist the STA in fast scanning, the AP may use the beacon frame or the probe response frame to carry a reduced neighbor report element, to report related information of a corresponding AP. In this way, during scanning, the STA may obtain information about a neighboring AP and select an appropriate AP for association. Therefore, to enable the legacy station to ignore the first AP, if the first AP is in the power save mode, the AP MLD may further send a reduced neighbor report element. A target beacon transmission time information field corresponding to the first AP in the reduced neighbor report element is set to a first value, and a target beacon transmission time information length is set to a second value, so that a legacy station ignores the first AP. Optionally, the non-AP MLD may receive the reduced neighbor report element. If there is a legacy station in the non-AP MLD, the transmission station may ignore the first AP. For example, in the RNR element, a target beacon transmission time information (TBTT Info Field) field corresponding to the first AP is set to 1, and a target beacon transmission time information length (TBTT Info Length) field is set to 3, to prevent the legacy STA from discovering the first AP by using the RNR, then probing the first AP, and being associated with the first AP.

The link corresponding to the first AP does not allow sending of a multicast data frame and/or a multicast management frame, because if the STA is in the power save mode, the AP usually continues to send a multicast frame (a multicast data frame and/or a multicast management frame) after sending a Beacon frame, and if the AP does not allow sending of a Beacon frame, the AP may not be allowed to send a management multicast frame and/or a multicast data frame.

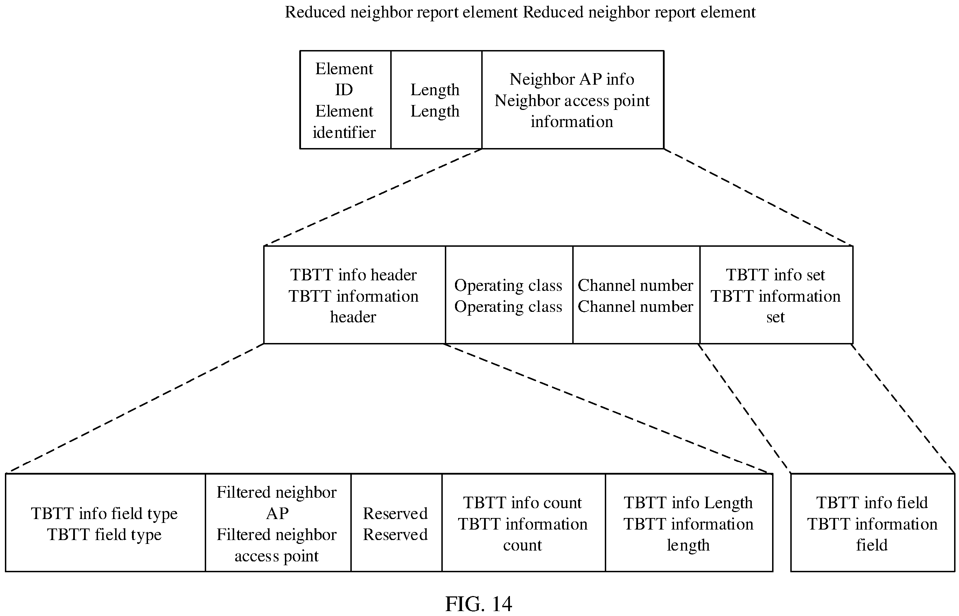

A format of the RNR element may be shown in FIG. 14. The RNR element includes an element ID field, a length field, and one or more neighboring AP information (Neighbor AP info) fields. The neighbor AP info field includes a TBTT information header (TBTT info Header) field, an operating class (Operating Class) field, a channel number (Channel Number) field, and one or more TBTT information set (TBTT info set) fields. The TBTT info header field includes a TBTT info field type field, a filtered neighbor AP (Filtered neighbor AP) field, a reserved field, a TBTT information count (TBTT info count) field, and a TBTT information length (TBTT info Length) field. The TBTT info set field includes one or more TBTT information fields (TBTT info fields).

The operating class field indicates an operating class of an operating channel of the reported AP. Herein, 0 is a reserved value of the operating class field.

The channel number field indicates a channel number corresponding to the operating channel of the reported AP. 0 is a reserved value of the channel number field. The STA may determine a specific location of a channel of the AP on a frequency band based on the operating class field and the channel number field.

The TBTT info field type field indicates a TBTT info type. This field and the TBTT info length field together indicate a format of the TBTT info field. Herein, 1, 2, and 3 are reserved values of the TBTT info field type field.

The filtered neighbor AP field indicates whether service set identifiers (service set identifiers, SSIDs) of all basic service sets (basic service sets, BSSs) carried in the neighbor AP info field match an SSID in the probe request frame.

The reserved field occupies 1 bit.

The TBTT info count field indicates a number of TBTT info fields included in the TBTT info set field.

The TBTT info length field indicates a length of each TBTT info field. Formats of information carried in the TBTT info field in different lengths may be shown in Table 1.

**Table 1**

| TBTT information length (octets) | Content carried in the TBTT information field |
|---|---|
| 1 | Neighbor AP TBTT offset (offset) field |
| 2 | Neighbor AP TBTT offset field and BSS parameter field |
| 4 | Neighbor AP TBTT offset field and MLD parameters field |
| 5 | Neighbor AP TBTT offset field and short (short) SSID field |
| 6 | Neighbor AP TBTT offset field, short SSID field, and BSS parameter |
| | field |
| 7 | Neighbor AP TBTT offset field and basic service set identifier (basic service set identifier, BSSID) field |
| 8 | Neighbor AP TBTT offset field, BSSID field, and BSS parameter field |
| 9 | Neighbor AP TBTT offset field, BSSID field, BSS parameter field, and 20 megahertz (MHz) power spectral density (power spectral density, PSD) field |
| 10 | Neighbor AP TBTT offset field, BSSID field, and MLD parameters field |
| 11 | Neighbor AP TBTT offset field, BSSID field, and short SSID field |
| 12 | Neighbor AP TBTT offset field, BSSID field, short SSID field, and BSS parameter field |
| 0, 3, 14, 15 | Reserved |
| 13 | Neighbor AP TBTT offset field, BSSID field, short SSID field, BSS parameter field, and 20 MHz PSD field |
| 16 | Neighbor AP TBTT offset field, BSSID field, short SSID field, BSS parameter field, 20 MHz PSD field, and MLD parameters field |
| 17-255 | Reserved, where the first 16 octets carry same information as the TBTT information field with a length of 16 |

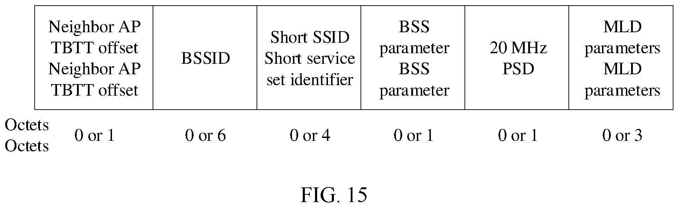

A possible format of the TBTT info field is shown in FIG. 15, and includes a target channel transmission time offset (Neighbor AP TBTT offset) field of a neighboring AP, a BSSID field, a short SSID field, a BSS Parameter field, a 20 MHz PSD field, and an MLD parameters field.

The neighbor AP TBTT offset field occupies 0 or 1 octet (octet), and indicates an offset between beacon frame sending times of a reported BSS and a BSS that sends the report (Report). A unit is a time unit (time unit, TU), namely, 1024 microseconds or 1 millisecond. The field being 254 indicates that the offset is 254 TUs or higher, and the field being 255 indicates that a specific offset is unknown.

The BSSID field is an optional field, occupies 0 or 6 octets, and indicates a BSSID corresponding to the reported BSS.

The short SSID field is an optional field, occupies 0 or 4 octets, and indicates an SSID of the BSS.

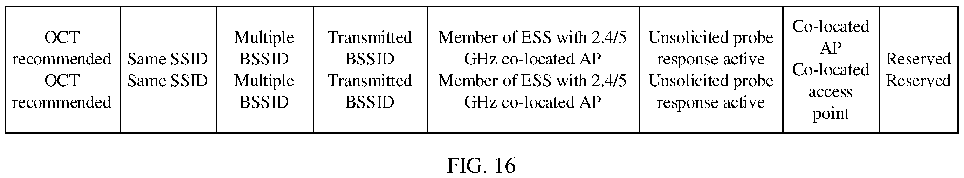

The BSS parameter field is an optional field, occupies 0 or 1 octet, and indicates a related parameter of the BSS. As shown in FIG. 16, the BSS parameter field may include an on-channel tunneling (On-channel Tunneling, OCT) recommended (recommended) field, a same (Same) SSID field, a multiple (Multiple) BSSID field, a transmitted (Transmitted) BSSID field, a member of extended service set with 2.4/5 GHz co-located AP (Member Of ESS With 2.4/5 GHz Co-Located AP) field, an unsolicited probe response active (Unsolicited Probe Response Active) field, a co-located AP (Co-located AP) field, and a reserved field. The OCT recommended field is located at a location of a bit 0, and indicates that the reported BSS expects to exchange a management-type media protocol data unit (media protocol data unit, MPDU) with the reported AP through an OCT mechanism. The same SSID field is located at a location of a bit 1, and indicates whether the reported AP and an AP that transmits the element have a same SSID. The multiple BSSID field is located at a location of a bit 2, and indicates whether the reported AP is a part of a multiple BSSID set. The transmitted BSSID field is located at a location of a bit 3. If the reported AP is a part of a multiple BSSID set, it further indicates whether the reported AP is a transmitted BSSID or a non-transmitted (non-transmitted) BSSID. The member of ESS with 2.4/5 GHz co-located AP field is located at a location of a bit 4, and indicates whether the reported AP is located at a same location as a 2.4/5 GHz AP (that is, whether the reported AP is a 6 GHz only AP) and is a member of an extended service set. The unsolicited probe response active field is located at a location of a bit 5, and indicates whether the reported AP enables an active probe response. The co-located AP field is located at a location of a bit 6, and indicates whether the reported AP and the AP that transmits the report are co-located. The reserved field is located at a location of a bit 7.

The 20 MHz PSD field is an optional field, occupies 0 or 1 octet, and indicates a maximum transmit power spectral density.

The MLD parameters field occupies 0 or 3 octets, and indicates a related MLD parameter. The field may include the following subfields: a multi-MLD ID field, a link ID field, a BSS parameters change count field, and a reserved field. The MLD ID field occupies 8 bits, and indicates an identifier of the AP MLD. The link ID field occupies 4 bits, and indicates a link identifier corresponding to the reported AP. The BSS parameters change count field occupies 8 bits. When a key update occurs on the reported AP, a value of this field increases. Otherwise, a value of this field remains unchanged. The reserved field occupies 4 bits.

In another implementation, the first AP in the power save mode is allowed to periodically wake up to send a beacon (Beacon) frame and maintain the awake state for a period of time. In this period, the AP may send one or more of a multicast data frame or a multicast management frame. Therefore, all associated STAs also need to wake up to receive the beacon and the multicast frame. The third duration corresponding to a period of time for maintaining the awake state is determined by the AP and is carried in the Beacon, for example, carried in the power save multi-link element. It should be noted that the third duration may be prolonged until the AP switches back to the doze state when the AP determines that all associated STAs are in the doze state. The AP MLD may adjust the first AP to switch between the doze state and the awake state.

For example, the non-AP MLD may send an aperiodic wakeup request. Correspondingly, the AP MLD may receive the aperiodic wakeup request. The aperiodic wakeup request is used to wake up the first AP in the doze state, and the AP MLD switches the first AP from the doze state to the awake state. The AP MLD may switch the first AP from the awake state to the doze state when determining that there is no to-be-transmitted data (for example, More Data=0).

If the AP MLD receives the aperiodic wakeup request, the first AP may wake up after a wakeup delay (Wakeup Delay), or wake up after a short interframe space (short inter-frame space, SIFS)+wakeup delay.

If the aperiodic wakeup request is sent by the non-AP MLD, the STA of the non-AP MLD is also in the awake state on a corresponding link; otherwise, the STA may be in the doze state in the power save mode.

It should be noted that, in the solution of the present invention, the More Data field may also be implemented by using another field, for example, an end of service (end of service period, EOSP).

In a cellular network scenario, a 3G base station is deployed in this scenario, and a 4G base station and a 5G base station are also deployed. Power consumption of the 5G base station is high. Therefore, in a case of low load, the 5G base station may be shut down or in the doze state. When a multimode terminal (for example, a mobile phone that supports 3G and supports 4G and 5G) wants to use a 5G network to transmit a service, the multimode terminal may send a wakeup request by using the 3G or 4G network. The wakeup request may carry location information and a QoS requirement (for example, a transmission rate and a delay requirement). In this way, a network side may determine to wake up a 5G base station that is close to the terminal. In addition, corresponding indication information may be further carried in the 3G and 4G networks to notify the terminal that a 5G base station that can be woken up exist around the terminal, and a wakeup request may be sent when necessary to wake up the 5G base station.

For another example, when the AP MLD enters the service period, the first AP switches from the doze state to the awake state. When the AP enters the non-service period, the first AP is switched from the awake state to the doze state.

If the TWT is set up on the link corresponding to the first AP, the first AP and the member STA may wake up when the TWT SP starts.

If the AP MLD and the non-AP MLD set up a TWT agreement on the link on which the first AP is located, the STA corresponding to the first AP and the non-AP MLD wakes up when the TWT SP starts; otherwise, the STA is in the doze state. In addition, unless the STA sends a corresponding aperiodic wakeup request, the STA is not allowed to send a management frame and/or a data frame to the first AP outside the TWT SP.

In an implementation, if the first AP is not in the link disablement mode, the AP MLD may further send a traffic identifier-to-link mapping element (TID-to-link mapping element). The traffic identifier-to-link mapping element includes fourth indication information, and the fourth indication information indicates that the second STA is allowed to perform transmission by using the enhanced distributed channel, or the fourth indication information indicates that the second STA is not allowed to perform transmission by using the enhanced distributed channel. Correspondingly, the non-AP MLD may receive the TID-to-link mapping element, to determine a channel access manner of the second STA. This implementation is beneficial to transmission of a low-delay service by using different channel access manners.

For example, 1 bit is added to the TID-to-link mapping element to indicate a channel access manner of the STA. When the 1 bit is set to 1, it indicates that trigger-only (Trigger-only) is allowed. That is, only the AP is allowed to trigger uplink transmission, and the STA is not allowed to perform sending through an enhanced distributed channel access (enhanced distributed channel access, EDCA) channel. That is, when the 1 bit is set to 1, it indicates that the AP sends at least one trigger frame during the TID-to-link mapping SP. When the 1 bit is set to 0, it indicates that the EDCA and Trigger hybrid manner is used. That is, the STA is allowed to perform EDCA access channel sending.

Optionally, when the AP MLD broadcasts TID-to-link mapping of a period, default mapping is used by default outside a TID-to-link mapping period of the period. That is, all TIDs are mapped to all links. That is, all links can transmit service data of any TID.

The foregoing implementations may be used separately or in combination.

It may be understood that, in embodiments of this application, an access point multi-link device (or a component (for example, a chip or a circuit) of the access point multi-link device) and/or a station multi-link device (or a component of the station multi-link device) may perform some or all of the steps in embodiments of this application. These steps or operations are merely examples. Other operations or variations of various operations may be further performed in embodiments of this application. In addition, the steps may be performed in a sequence different from a sequence presented in embodiments of this application, and not all operations in embodiments of this application need to be performed.

It should be noted that, in the following embodiments of this application, names of messages or names of parameters in messages of devices are merely examples, and the messages or the parameters may have other names in specific implementations. This is not specifically limited in embodiments of this application. In addition, a sequence, names, values, carried information, meanings represented by, or octets/bits occupied by fields in a frame structure are merely an example. This is not specifically limited in embodiments of this application.

In the foregoing embodiments provided in this application, the methods provided in embodiments of this application are separately described from a perspective of interaction between an access point link device and a station multi-link device. To implement the functions in the methods provided in embodiments of this application, the access point link device or the station multi-link device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, communication apparatuses, in embodiments of this application, configured to implement the foregoing methods. Therefore, all the foregoing content may be used in the following embodiments. Repeated content is not described again.

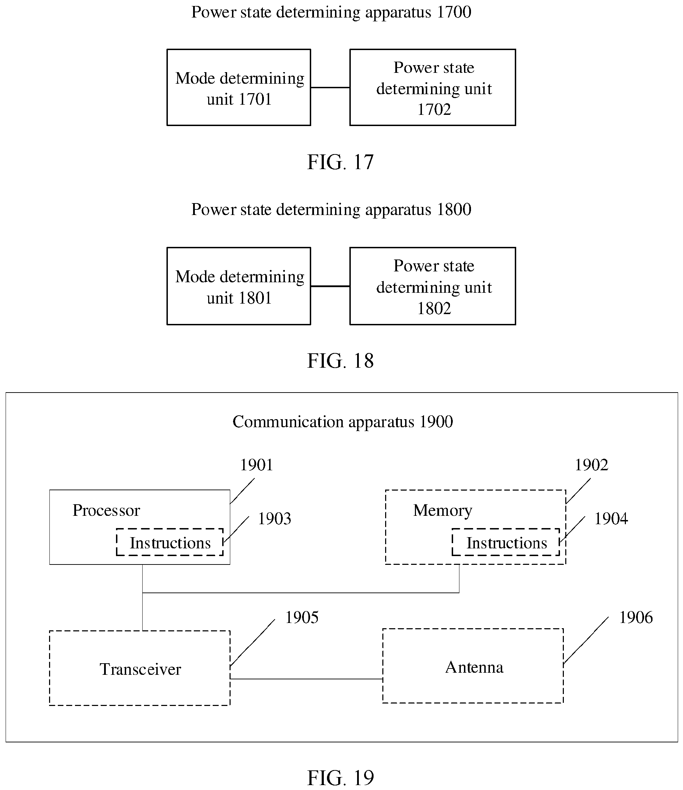

FIG. 17 shows a possible representation form of a power state determining apparatus according to an embodiment of this application. The power state determining apparatus 1700 may be configured to implement functions or steps implemented by an access point link device in the foregoing method embodiment. The power state determining apparatus may include a mode determining unit 1701 and a power state determining unit 1702. Optionally, the power state determining apparatus may further include a transceiver unit, a switching unit, and/or a storage unit. The transceiver unit may be configured to perform all receiving/sending operations performed by the access point link device in the foregoing embodiments. The storage unit may be configured to store instructions (code or a program) and/or data. The mode determining unit 1701 and the power state determining unit 1702 may be coupled to the storage unit. For example, the mode determining unit 1701 and the power state determining unit 1702 may read the instructions (code or a program) and/or data in the storage unit, to implement a corresponding method. The foregoing units may be disposed independently, or may be partially or completely integrated.

In some possible implementations, the power state determining apparatus 1700 can correspondingly implement behaviors and functions of the access point link device in the foregoing method embodiment. For example, the power state determining apparatus 1700 may be an AP MLD, or may be a component (for example, a chip or a circuit) applied to an AP MLD.

For example, the mode determining unit 1701 is configured to determine that a first access point is in a power save mode.

The power state determining unit 1702 is configured to determine a power state of the first access point based on a priority sequence of different operations when the first access point is in the power save mode. The operations include one or more of link disablement, an aperiodic wakeup request, and periodic target wakeup.

In a possible implementation, a priority of the link disablement is higher than a priority of the aperiodic wakeup request; or a priority of the link disablement is higher than a priority of the periodic target wakeup; or a priority of the aperiodic wakeup request is higher than a priority of the periodic target wakeup; or a priority of aperiodic link disablement is higher than a priority of the aperiodic wakeup request, and the priority of the aperiodic wakeup request is higher than a priority of periodic link disablement; or a priority of the aperiodic link disablement is higher than a priority of the periodic target wakeup, and the priority of the periodic target wakeup is higher than a priority of the periodic link disablement.

In a possible implementation, the power state determining unit 1702 is specifically configured to: when the first access point receives the aperiodic wakeup request in an effective period of the link disablement, maintain, by the first access point, a doze state in the effective period of the link disablement, and switch to an awake state after an end time of the link disablement. The doze state does not allow the first access point to perform receiving/sending, and the awake state allows the first access point to perform receiving/sending.

In a possible implementation, the power state determining unit 1702 is specifically configured to maintain, by the first access point, a doze state in an effective period of the link disablement when the first access point performs an operation of the periodic target wakeup in the effective period of the link disablement.

In a possible implementation, the power state determining unit 1702 is specifically configured to: when the aperiodic wakeup request is received in a period other than a service period corresponding to the periodic target wakeup, switch, by the first access point, to an awake state in response to the received aperiodic wakeup request.

In a possible implementation, the power state determining unit 1702 is specifically configured to: maintain, by the first access point, a doze state in an effective period of the link disablement when the operations of the link disablement, the aperiodic wakeup request, and the periodic target wakeup simultaneously exist; or switch, by the first access point, to an awake state in response to the received aperiodic wakeup request when the link disablement does not exist and when the aperiodic wakeup request is received in a period other than a service period corresponding to the periodic target wakeup.

In a possible implementation, the power state determining unit 1702 is specifically configured to: maintain, by the first access point, a doze state in an effective period of the aperiodic link disablement when the first access point receives the aperiodic wakeup request in the effective period of the aperiodic link disablement; or switch, by the first access point, to an awake state in response to the received aperiodic wakeup request when the first access point receives the aperiodic wakeup request in an effective period of the periodic link disablement.

In a possible implementation, the power state determining unit 1702 is specifically configured to: maintain, by the first access point, a doze state in an effective period of the aperiodic link disablement when the first access point performs an operation of the periodic target wakeup in the effective period of the aperiodic link disablement; or when the first access point performs an operation of the periodic target wakeup in an effective period of the periodic link disablement, switch, by the first access point, to an awake state at a start time of the periodic target wakeup, and switch to a doze state at an end time of the periodic target wakeup.

In a possible implementation, the first access point in the power save mode is not allowed to send one or more of a beacon frame, a probe response frame, an association response frame, a multicast data frame, or a multicast management frame.

In a possible implementation, the power state determining unit 1702 is further configured to send a reduced neighbor report element. A target beacon transmission time information field corresponding to the first access point in the reduced neighbor report element is set to a first value, and a target beacon transmission time information length is set to a second value, so that a legacy station ignores the first access point.

In a possible implementation, the power state determining unit 1702 is further configured to receive the aperiodic wakeup request. The aperiodic wakeup request is used to wake up the first access point in the doze state. The first access point is switched from the doze state to the awake state.

In a possible implementation, the power state determining unit 1702 is further configured to switch the first access point from the doze state to the awake state when entering the service period.

In a possible implementation, the power state determining unit 1702 is further configured to send a first PPDU. The first PPDU carries first indication information, the first indication information indicates a power management mode that the first access point is in, and the power mode includes the power save mode.

In a possible implementation, the first indication information is a power management field, and the power management field occupies 1 bit.

In a possible implementation, the power state determining unit 1702 is further configured to send a second PPDU if the first access point is in a power save mode. The second PPDU carries a media access control header field, the media access control header field carries second indication information, and the second indication information indicates that the first access point is in the power save mode.

In a possible implementation, the power state determining unit 1702 is further configured to send a power save multi-link element. The power save multi-link element includes a wakeup delay field and/or a start time field of entering the power save mode, the wakeup delay field indicates a time required for switching the first access point from the doze state to the awake state, and the start time field indicates a time at which the first access point enters the power save mode.

In a possible implementation, the power state determining unit 1702 is further configured to receive a third PPDU. The third PPDU carries third indication information, and the third indication information indicates that a first station or a second access point supports a power save operation of the first access point, or the third indication information indicates that a first station or a second access point does not support a power save operation of the first access point.

In a possible implementation, the power state determining unit 1702 is further configured to send a traffic identifier-to-link mapping element if the first access point is not in a mode of the link disablement. The traffic identifier-to-link mapping element includes fourth indication information, and the fourth indication information indicates that a second station is allowed to perform transmission through an enhanced distributed channel, or the fourth indication information indicates that a second station is not allowed to perform transmission through an enhanced distributed channel.

It should be noted that the power state determining apparatus 1700 may be configured to perform the foregoing method embodiments. For specific steps, descriptions, and corresponding beneficial effects, refer to the foregoing method embodiments. Details are not described herein again.

It should be understood that, in this embodiment of this application, (some functions of) the mode determining unit 1701 and the power state determining unit 1702 may be implemented by a processor/processing circuit or a circuit component related to a processor/processing circuit, and (some functions of) the power state determining unit 1702 may be implemented by a transceiver/transceiver interface, a circuit component related to a transceiver/transceiver interface, or a communication interface.

FIG. 18 shows a possible representation form of a power state determining apparatus according to an embodiment of this application. The power state determining apparatus 1800 may be configured to implement functions or steps implemented by a non-access point link device in the foregoing method embodiment. The power state determining apparatus may include a mode determining unit 1801 and a power state determining unit 1802. Optionally, the power state determining apparatus may further include a transceiver unit and/or a storage unit. The transceiver unit may be configured to perform all receiving/sending operations performed by the access point link device in the foregoing embodiments. The storage unit may be configured to store instructions (code or a program) and/or data. The mode determining unit 1801 and the power state determining unit 1802 may be coupled to the storage unit. For example, the mode determining unit 1801 and the power state determining unit 1802 may read the instructions (code or a program) and/or data in the storage unit, to implement a corresponding method. The foregoing units may be disposed independently, or may be partially or completely integrated.

In some possible implementations, the power state determining apparatus 1800 can correspondingly implement behaviors and functions of the non-access point link device in the foregoing method embodiment. For example, the power state determining apparatus 1800 may be a non-AP MLD, or may be a component (for example, a chip or a circuit) applied to a non-AP MLD.

For example, the mode determining unit 1801 is configured to determine that a first access point of an access point multi-link device is in a power save mode.

The power state determining unit 1802 is configured to determine a power state of the first access point based on a priority sequence of different operations when the first access point is in the power save mode. The operations include one or more of link disablement, an aperiodic wakeup request, and periodic target wakeup.

In a possible implementation, a priority of the link disablement is higher than a priority of the aperiodic wakeup request; or a priority of the link disablement is higher than a priority of the periodic target wakeup; or a priority of the aperiodic wakeup request is higher than a priority of the periodic target wakeup; or a priority of aperiodic link disablement is higher than a priority of the aperiodic wakeup request, and the priority of the aperiodic wakeup request is higher than a priority of periodic link disablement; or a priority of the aperiodic link disablement is higher than a priority of the periodic target wakeup, and the priority of the periodic target wakeup is higher than a priority of the periodic link disablement.

The power state determining unit 1802 is specifically configured to: when the first access point is in an effective period of the link disablement and the power state determining apparatus sends the aperiodic wakeup request to the first access point, maintain, by the first access point, a doze state in the effective period of the link disablement, and switch to an awake state after an end time of the link disablement. The doze state does not allow the first access point to perform receiving/sending, and the awake state allows the first access point to perform receiving/sending.

In a possible implementation, the power state determining unit 1802 is specifically configured to maintain, by the first access point, a doze state in an effective period of the link disablement when the first access point performs an operation of the periodic target wakeup in the effective period of the link disablement.

In a possible implementation, the power state determining unit 1802 is specifically configured to switch, by the first access point, to an awake state in response to the aperiodic wakeup request when the power state determining apparatus sends the aperiodic wakeup request to the first access point in a period other than a service period corresponding to the periodic target wakeup.

In a possible implementation, the power state determining unit 1802 is specifically configured to: maintain, by the first access point, a doze state in an effective period of the link disablement when the operations of the link disablement, the aperiodic wakeup request, and the periodic target wakeup simultaneously exist; or switch, by the first access point, to an awake state in response to the aperiodic wakeup request when the link disablement does not exist and when the power state determining apparatus sends the aperiodic wakeup request to the first access point in a period other than a service period corresponding to the periodic target wakeup.

In a possible implementation, the power state determining unit 1802 is specifically configured to: maintain, by the first access point, a doze state in an effective period of the aperiodic link disablement when the first access point in the effective period of the aperiodic link disablement and the power state determining apparatus sends the aperiodic wakeup request to the first access point; or switch, by the first access point, to an awake state in response to the aperiodic wakeup request when the first access point is in an effective period of the periodic link disablement and the power state determining apparatus sends the aperiodic wakeup request to the first access point.

In a possible implementation, the power state determining unit 1802 is specifically configured to: maintain, by the first access point, a doze state in an effective period of the aperiodic link disablement when the first access point performs an operation of the periodic target wakeup in the effective period of the aperiodic link disablement; or when the first access point performs an operation of the periodic target wakeup in an effective period of the periodic link disablement, switch, by the first access point, to an awake state at a start time of the periodic target wakeup, and switch to a doze state at an end time of the periodic target wakeup.

In a possible implementation, the power state determining unit 1802 is further configured to receive a reduced neighbor report element. A target beacon transmission time information field corresponding to the first access point in the reduced neighbor report element is set to a first value, and a target beacon transmission time information length is set to a second value, so that a legacy station ignores the first access point.

In a possible implementation, the power state determining unit 1802 is further configured to send the aperiodic wakeup request. The aperiodic wakeup request is used to wake up the first access point in the power save mode.

In a possible implementation, the power state determining unit 1802 is further configured to receive a first PPDU. The first PPDU carries first indication information, the first indication information indicates a power management mode that the first access point is in, and the power mode includes the power save mode.

In a possible implementation, the first indication information is a power management field, and the power management field occupies 1 bit.

In a possible implementation, the power state determining unit 1802 is further configured to receive a second PPDU. The second PPDU carries a media access control header field, the media access control header field carries second indication information, and the second indication information indicates that the first access point is in the power save mode.

In a possible implementation, the power state determining unit 1802 is further configured to receive a power save multi-link element. The power save multi-link element includes a wakeup delay field and/or a start time field of entering the power save mode, the wakeup delay field indicates a time required for switching the first access point from the doze state to the awake state, and the start time field indicates a time at which the first access point enters the power save mode.

In a possible implementation, the power state determining unit 1802 is further configured to send a third PPDU. The third PPDU carries third indication information, and the third indication information indicates that a first station of a non-access point multi-link device supports a power save operation of the first access point, or the third indication information indicates that the first station does not support a power save operation of the first access point.

In a possible implementation, the power state determining unit 1802 is further configured to receive a traffic identifier-to-link mapping element. The traffic identifier-to-link mapping element includes fourth indication information, and the fourth indication information indicates that a second station of the non-access point multi-link device is allowed to perform transmission through an enhanced distributed channel, or the fourth indication information indicates that a second station is not allowed to perform transmission through an enhanced distributed channel.

It should be noted that the power state determining apparatus 1800 may be configured to perform the foregoing method embodiments. For specific steps, descriptions, and corresponding beneficial effects, refer to the foregoing method embodiments. Details are not described herein again.

It should be understood that, in this embodiment of this application, (some functions of) the mode determining unit 1801 and the power state determining unit 1802 may be implemented by a processor/processing circuit or a circuit component related to a processor/processing circuit, and (some functions of) the power state determining unit 1802 may be implemented by a transceiver/transceiver interface, a circuit component related to a transceiver/transceiver interface, or a communication interface.

FIG. 19 shows a possible representation form of a communication apparatus according to an embodiment of this application. The communication apparatus 1900 may include a processor 1901 and a transceiver 1905, and optionally, further includes a memory 1902. The communication apparatus may be used as a PPDU generation and sending apparatus in this application, or may be used as a PPDU receiving apparatus in this application.

The transceiver 1905 may be referred to as a transceiver unit, a transceiver machine, a transceiver circuit, or the like, and is configured to implement a transceiver function. The transceiver 1905 may include a receiver and a transmitter. The receiver may be referred to as a receiver machine, a receiving circuit, or the like, and is configured to implement a receiving function. The transmitter may be referred to as a transmitter machine, a transmitter circuit, or the like, and is configured to implement a sending function.

The memory 1902 may store a computer program, software code, or instructions 1904. The computer program, software code, or instructions 1904 may also be referred to as firmware. The processor 1901 may run computer program, software code, or instructions 1903, or invoke the computer program, software code, or instructions 1904 stored in the memory 1902, to control a MAC layer and a PHY layer, so as to implement the power state determining method provided in the following embodiments of this application. The processor 1901 may be a central processing unit (central processing unit, CPU), and the memory 1902 may be, for example, a read-only memory (read-only memory, ROM) or a random access memory (random access memory, RAM).

The processor 1901 and the transceiver 1905 described in this application may be implemented on an integrated circuit (integrated circuit, IC), an analog IC, a radio frequency integrated circuit RFIC, a mixed signal IC, an application-specific integrated circuit (application specific integrated circuit, ASIC), a printed circuit boards (printed circuit board, PCB), an electronic device, or the like.

The communication apparatus 1900 may further include an antenna 1906, and modules/units included in the communication apparatus 1900 are merely an example for description. This is not limited in this application.

As described above, the communication apparatus 1900 described in the foregoing embodiments may be an AP MLD or a STA MLD. However, a scope of the communication apparatus described in this application is not limited thereto, and a structure of the communication apparatus may not be limited by FIG. 19. The AP MLD includes one or more APs, and the STA MLD includes one or more STAs.

The AP may be a multi-antenna/multi-radio frequency AP, or may be a single-antenna/single-radio frequency AP. The antenna/radio frequency AP is configured to send/receive a data packet. In an implementation, an antenna part or a radio frequency part of the AP may be separated from a main body part of the AP, and is in a remote layout structure. In an implementation, the STA may be a single antenna/radio frequency STA, or may be a multi-antenna/multi-radio frequency STA, and may be a device with more than two antennas. The antenna/radio frequency STA is configured to send/receive a data packet. In an implementation, an antenna part or a radio frequency part of the STA may be separated from a main body part of the STA, and is in a remote layout structure.

The communication apparatus in this application may alternatively be an independent device or may be a part of a large device. For example, an implementation form of the communication apparatus may be:
(1) an independent integrated circuit IC, chip, chip system, or chip subsystem; (2) a set with one or more ICs, where optionally, the IC set may also include a storage component configured to store data or instructions; (3) a module that can be embedded in another device; (4) a receiver, an intelligent terminal, a wireless device, a handset, a mobile unit, a vehicle-mounted device, a cloud device, an artificial intelligence device, or the like; or (5) others or the like.

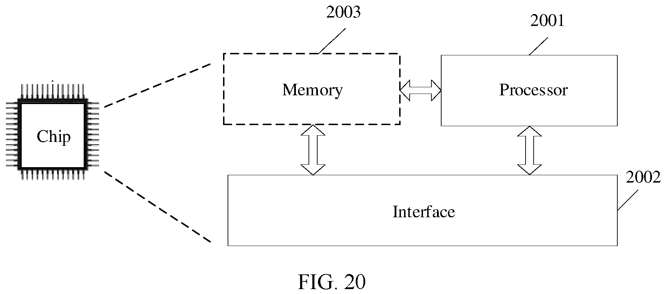

For a case in which the implementation form of the communication apparatus is a chip or chip system, refer to a schematic diagram of a structure of a chip shown in FIG. 20. The chip shown in FIG. 20 includes a processor 2001 and an interface 2002. There may be one or more processors 2001, and there may be a plurality of interfaces 2002. The interface 2002 is configured to receive and send signals. Optionally, the chip or the chip system may include a memory 2003. The memory 2003 is configured to store program instructions and data that are necessary for the chip or the chip system.

In addition, embodiments of this application do not limit the protection scope and applicability of the claims. A person skilled in the art may make adaptive changes to functions and deployments of elements in this application, or may omit, replace, or add various processes or components as appropriate without departing from the scope of embodiments of this application.

An embodiment of this application further provides a computer-readable storage medium. The computer-readable storage medium stores a computer program; and when the computer-readable storage medium is executed by a computer, functions of the foregoing method embodiments are implemented.

An embodiment of this application further provides a computer program product. When the computer program product is executed by a computer, functions of the foregoing method embodiments are implemented.

An embodiment of this application further provides a chip system. The chip system includes a processor and an interface, and is configured to support a communication transmission device in implementing a function related to an access point or a station in the foregoing method embodiments, for example, determining or processing at least one of data and information in the foregoing methods. In a possible design, the chip system further includes a memory. The memory is configured to store necessary information and data of the communication apparatus. The chip system may include a chip, or may include a chip and another discrete component.

An embodiment of this application provides a functional entity, and the functional entity is configured to implement the foregoing communication methods.

An embodiment of this application provides a communication system. The communication system includes an access point multi-link device and a non-access point multi-link device that implement the foregoing power state determining method.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by the hardware or the software depends on a particular application and a design constraint condition of a technical implementation. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the implementations of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical implementations of this application essentially, or the part contributing to the conventional technology, or some of the technical implementations may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, or removed based on an actual requirement.

The modules/units in the apparatus in embodiments of this application may be combined, divided, and deleted based on an actual requirement.

The term "and/or" in this application describes an association relationship for describing associated objects and represents that three relationships may exist. For example, A and/or B may represent the following three cases: Only A exists, both A and B exist, and only B exists. The character "/" usually indicates an "or" relationship between the associated objects. In this application, "at least one" means one or more, and "a plurality of" means two or more. In addition, it should be understood that in description of this application, terms such as "first" and "second" are merely used for distinguishing and description, but should not be understood as indicating or implying relative importance, or should not be understood as indicating or implying a sequence.

In addition, in this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in different embodiments and the implementations/implementation methods in embodiments may be combined to form a new embodiment, implementation, or implementation method based on an internal logical relationship thereof.

The foregoing embodiments are merely intended for describing the technical implementations of this application, but not for limiting this application. Although this application is described in detail with reference to the foregoing embodiments, a person of ordinary skill in the art should understand that a person may still make modifications to the technical implementations described in the foregoing embodiments or make equivalent replacements to some technical features thereof, without departing from the scope of the technical implementations of embodiments of this application.

## Claims

1. A power state determining method, wherein the method comprises:
determining, by an access point multi-link device, that a first access point is in a power save mode; and
determining, by the access point multi-link device, a power state of the first access point based on a priority sequence of different operations when the first access point is in the power save mode, wherein the operations comprise one or more of link disablement, an aperiodic wakeup request, and periodic target wakeup.

2. The method according to claim 1, wherein the periodic target wakeup is periodic target wakeup in the power save mode.

3. The method according to claim 1 or 2, wherein
a priority of the link disablement is higher than a priority of the aperiodic wakeup request; or
a priority of the link disablement is higher than a priority of the periodic target wakeup; or
a priority of the aperiodic wakeup request is higher than a priority of the periodic target wakeup; or
a priority of aperiodic link disablement is higher than a priority of the aperiodic wakeup request, and the priority of the aperiodic wakeup request is higher than a priority of periodic link disablement; or
a priority of aperiodic link disablement is higher than a priority of the periodic target wakeup, and the priority of the periodic target wakeup is higher than a priority of periodic link disablement.

4. The method according to claim 3, wherein the priority of the link disablement is higher than the priority of the aperiodic wakeup request, and the determining, by the access point multi-link device, a power state of the first access point based on a priority sequence of different operations when the first access point is in the power save mode comprises:
when the first access point receives the aperiodic wakeup request in an effective period of the link disablement, maintaining, by the first access point, a doze state in the effective period of the link disablement, and switching to an awake state after an end time of the link disablement, wherein the doze state does not allow the first access point to perform receiving/sending, and the awake state allows the first access point to perform receiving/sending.

5. The method according to claim 3, wherein the priority of the link disablement is higher than the priority of the periodic target wakeup, and the determining, by the access point multi-link device, a power state of the first access point based on a priority sequence of different operations when the first access point is in the power save mode comprises:
maintaining, by the first access point, a doze state in an effective period of the link disablement when the first access point performs an operation of the periodic target wakeup in the effective period of the link disablement.

6. The method according to claim 3, wherein the priority of the aperiodic wakeup request is higher than the priority of the periodic target wakeup, and the determining, by the access point multi-link device, a power state of the first access point based on a priority sequence of different operations when the first access point is in the power save mode comprises:
when the aperiodic wakeup request is received in a period other than a service period corresponding to the periodic target wakeup, switching, by the first access point, to an awake state in response to the received aperiodic wakeup request.

7. The method according to claim 3, wherein the priority of the link disablement is higher than the priority of the aperiodic wakeup request, the priority of the aperiodic wakeup request is higher than the priority of the periodic target wakeup, and the determining, by the access point multi-link device, a power state of the first access point based on a priority sequence of different operations when the first access point is in the power save mode comprises:
maintaining, by the first access point, a doze state in an effective period of the link disablement when the operations of the link disablement, the aperiodic wakeup request, and the periodic target wakeup simultaneously exist; or
when the link disablement does not exist and when the aperiodic wakeup request is received in a period other than a service period corresponding to the periodic target wakeup, switching, by the first access point, to an awake state in response to the received aperiodic wakeup request.

8. The method according to claim 3, wherein the priority of the aperiodic link disablement is higher than the priority of the aperiodic wakeup request, the priority of the aperiodic wakeup request is higher than the priority of the periodic link disablement, and the determining, by the access point multi-link device, a power state of the first access point based on a priority sequence of different operations when the first access point is in the power save mode comprises:
maintaining, by the first access point, a doze state in an effective period of the aperiodic link disablement when the first access point receives the aperiodic wakeup request in the effective period of the aperiodic link disablement; or
switching, by the first access point, to an awake state in response to the received aperiodic wakeup request when the first access point receives the aperiodic wakeup request in an effective period of the periodic link disablement.

9. The method according to claim 3, wherein the priority of the aperiodic link disablement is higher than the priority of the periodic target wakeup, the priority of the periodic target wakeup is higher than the priority of the periodic link disablement, and the determining, by the access point multi-link device, a power state of the first access point based on a priority sequence of different operations when the first access point is in the power save mode comprises:
maintaining, by the first access point, a doze state in an effective period of the aperiodic link disablement when the first access point performs an operation of the periodic target wakeup in the effective period of the aperiodic link disablement; or
when the first access point performs an operation of the periodic target wakeup in an effective period of the periodic link disablement, switching, by the first access point, to an awake state at a start time of the periodic target wakeup, and switching to a doze state at an end time of the periodic target wakeup.

10. The method according to any one of claims 1 to 9, wherein the first access point is not allowed to send one or more of a beacon frame, a probe response frame, an association response frame, a multicast data frame, or a multicast management frame.

11. The method according to any one of claims 1 to 10, wherein the method further comprises:
sending, by the access point multi-link device, a reduced neighbor report element, wherein a target beacon transmission time information field corresponding to the first access point in the reduced neighbor report element is set to a first value, and a target beacon transmission time information length is set to a second value, so that a legacy station ignores the first access point.

12. The method according to any one of claims 1 to 11, wherein the method further comprises:
receiving, by the access point multi-link device, the aperiodic wakeup request, wherein the aperiodic wakeup request is used to wake up the first access point in the power save mode; and switching, by the access point multi-link device, the first access point from the doze state to the awake state; or
switching, by the access point multi-link device, the first access point from the doze state to the awake state when entering the service period.

13. The method according to any one of claims 1 to 12, wherein the method further comprises:
sending, by the access point multi-link device, a first physical layer protocol data unit PPDU, wherein the first PPDU carries first indication information, the first indication information indicates a power management mode that the first access point is in, and the power mode comprises the power save mode.

14. The method according to claim 13, wherein the first indication information is a power management field, and the power management field occupies 1 bit.

15. The method according to any one of claims 1 to 14, wherein the method further comprises:
sending, by the access point multi-link device, a second PPDU, wherein the second PPDU carries a media access control header field, the media access control header field carries second indication information, and the second indication information indicates that the first access point is in the power save mode.

16. The method according to any one of claims 1 to 14, wherein the method further comprises:
sending, by the access point multi-link device, a power save multi-link element, wherein the power save multi-link element comprises a wakeup delay field and/or a start time field of entering the power save mode, the wakeup delay field indicates a time required for switching the first access point from the doze state to the awake state, and the start time field indicates a time at which the first access point enters the power save mode.

17. The method according to any one of claims 1 to 14, wherein the method further comprises:
receiving, by the access point multi-link device, a third PPDU, wherein the third PPDU carries third indication information, and the third indication information indicates that a first station or a second access point supports a power save operation of the first access point, or the third indication information indicates that a first station or a second access point does not support a power save operation of the first access point.

18. The method according to any one of claims 1 to 17, wherein the method further comprises:
sending, by the access point multi-link device, a traffic identifier-to-link mapping element if the first access point is not in a mode of the link disablement, wherein the traffic identifier-to-link mapping element comprises fourth indication information, and the fourth indication information indicates that a second station is allowed to perform transmission through an enhanced distributed channel, or the fourth indication information indicates that a second station is not allowed to perform transmission through an enhanced distributed channel.

19. A power state determining method, wherein the method comprises:
determining, by a non-access point multi-link device, that a first access point of an access point multi-link device is in a power save mode; and
determining, by the non-access point multi-link device, a power state of the first access point based on a priority sequence of different operations when the first access point is in the power save mode, wherein the operations comprise one or more of link disablement, aperiodic wakeup, and periodic target wakeup.

20. The method according to claim 19, wherein the periodic target wakeup is periodic target wakeup in the power save mode.

21. The method according to claim 19 or 20, wherein
a priority of the link disablement is higher than a priority of the aperiodic wakeup request; or
a priority of the link disablement is higher than a priority of the periodic target wakeup; or
a priority of the aperiodic wakeup request is higher than a priority of the periodic target wakeup; or
a priority of aperiodic link disablement is higher than a priority of the aperiodic wakeup request, and the priority of the aperiodic wakeup request is higher than a priority of periodic link disablement; or
a priority of aperiodic link disablement is higher than a priority of the periodic target wakeup, and the priority of the periodic target wakeup is higher than a priority of periodic link disablement.

22. The method according to claim 21, wherein the priority of the link disablement is higher than the priority of the aperiodic wakeup request, and the determining, by the non-access point multi-link device, a power state of the first access point based on a priority sequence of different operations when the first access point is in the power save mode comprises:
when the first access point is in an effective period of the link disablement and the non-access point multi-link device sends the aperiodic wakeup request to the first access point, maintaining, by the first access point, a doze state in the effective period of the link disablement, and switching to an awake state after an end time of the link disablement, wherein the doze state does not allow the first access point to perform receiving/sending, and the awake state allows the first access point to perform receiving/sending.

23. The method according to claim 21, wherein the priority of the link disablement is higher than the priority of the periodic target wakeup, and the determining, by the non-access point multi-link device, a power state of the first access point based on a priority sequence of different operations when the first access point is in the power save mode comprises:
maintaining, by the first access point, a doze state in an effective period of the link disablement when the first access point performs an operation of the periodic target wakeup in the effective period of the link disablement.

24. The method according to claim 21, wherein the priority of the aperiodic wakeup request is higher than the priority of the periodic target wakeup, and the determining, by the non-access point multi-link device, a power state of the first access point based on a priority sequence of different operations when the first access point is in the power save mode comprises:
switching, by the first access point, to an awake state in response to the aperiodic wakeup request when the non-access point multi-link device sends the aperiodic wakeup request to the first access point in a period other than a service period corresponding to the periodic target wakeup.

25. The method according to claim 21, wherein the priority of the link disablement is higher than the priority of the aperiodic wakeup request, the priority of the aperiodic wakeup request is higher than the priority of the periodic target wakeup, and the determining, by the non-access point multi-link device, a power state of the first access point based on a priority sequence of different operations when the first access point is in the power save mode comprises:
maintaining, by the first access point, a doze state in an effective period of the link disablement when the operations of the link disablement, the aperiodic wakeup request, and the periodic target wakeup simultaneously exist; or
switching, by the first access point, to an awake state in response to the aperiodic wakeup request when the link disablement does not exist and when the non-access point multi-link device sends the aperiodic wakeup request to the first access point in a period other than a service period corresponding to the periodic target wakeup.

26. The method according to claim 21, wherein the priority of the aperiodic link disablement is higher than the priority of the aperiodic wakeup request, the priority of the aperiodic wakeup request is higher than the priority of the periodic link disablement, and the determining, by the non-access point multi-link device, a power state of the first access point based on a priority sequence of different operations when the first access point is in the power save mode comprises:
maintaining, by the first access point, a doze state in an effective period of the aperiodic link disablement when the first access point in the effective period of the aperiodic link disablement and the non-access point multi-link device sends the aperiodic wakeup request to the first access point; or
switching, by the first access point, to an awake state in response to the aperiodic wakeup request when the first access point is in an effective period of the periodic link disablement and the non-access point multi-link device sends the aperiodic wakeup request to the first access point.

27. The method according to claim 21, wherein the priority of the aperiodic link disablement is higher than the priority of the periodic target wakeup, the priority of the periodic target wakeup is higher than the priority of the periodic link disablement, and the determining, by the non-access point multi-link device, a power state of the first access point based on a priority sequence of different operations when the first access point is in the power save mode comprises:
maintaining, by the first access point, a doze state in an effective period of the aperiodic link disablement when the first access point performs an operation of the periodic target wakeup in the effective period of the aperiodic link disablement; or
when the first access point performs an operation of the periodic target wakeup in an effective period of the periodic link disablement, switching, by the first access point, to an awake state at a start time of the periodic target wakeup, and switching to a doze state at an end time of the periodic target wakeup.

28. The method according to any one of claims 19 to 27, wherein the method further comprises:
receiving, by the non-access point multi-link device, a reduced neighbor report element, wherein a target beacon transmission time information field corresponding to the first access point in the reduced neighbor report element is set to a first value, and a target beacon transmission time information length is set to a second value, so that a legacy station ignores the first access point.

29. The method according to any one of claims 19 to 28, wherein the method further comprises:
sending, by the non-access point multi-link device, the aperiodic wakeup request, wherein the aperiodic wakeup request is used to wake up the first access point in the power save mode.

30. The method according to any one of claims 19 to 29, wherein the method further comprises:
receiving, by the non-access point multi-link device, a first physical layer protocol data unit PPDU, wherein the first PPDU carries first indication information, the first indication information indicates a power management mode that the first access point is in, and the power mode comprises the power save mode.

31. The method according to claim 30, wherein the first indication information is a power management field, and the power management field occupies 1 bit.

32. The method according to any one of claims 19 to 31, wherein the method further comprises:
receiving, by the non-access point multi-link device, a second PPDU, wherein the second PPDU carries a media access control header field, the media access control header field carries second indication information, and the second indication information indicates that the first access point is in the power save mode.

33. The method according to any one of claims 19 to 32, wherein the method further comprises:
receiving, by the access point multi-link device, a power save multi-link element, wherein the power save multi-link element comprises a wakeup delay field and/or a start time field of entering the power save mode, the wakeup delay field indicates a time required for switching the first access point from the doze state to the awake state, and the start time field indicates a time at which the first access point enters the power save mode.

34. The method according to any one of claims 19 to 33, wherein the method further comprises:
sending, by the non-access point multi-link device, a third PPDU, wherein the third PPDU carries third indication information, and the third indication information indicates that a first station of a non-access point multi-link device supports a power save operation of the first access point, or the third indication information indicates that the first station does not support a power save operation of the first access point.

35. The method according to any one of claims 19 to 34, wherein the method further comprises:
receiving, by the non-access point multi-link device, a traffic identifier-to-link mapping element, wherein the traffic identifier-to-link mapping element comprises fourth indication information, and the fourth indication information indicates that a second station of the non-access point multi-link device is allowed to perform transmission through an enhanced distributed channel, or the fourth indication information indicates that a second station is not allowed to perform transmission through an enhanced distributed channel.

36. A power state determining apparatus, comprising a mode determining unit and a power state determining unit, wherein
the mode determining unit is configured to determine that a first access point is in a power save mode; and
the power state determining unit is configured to determine a power state of the first access point based on a priority sequence of different operations when the first access point is in the power save mode, wherein the operations comprise one or more of link disablement, an aperiodic wakeup request, and periodic target wakeup.

37. The apparatus according to claim 36, wherein the periodic target wakeup is periodic target wakeup in the power save mode.

38. The apparatus according to claim 36 or 37, wherein
a priority of the link disablement is higher than a priority of the aperiodic wakeup request; or
a priority of the link disablement is higher than a priority of the periodic target wakeup; or
a priority of the aperiodic wakeup request is higher than a priority of the periodic target wakeup; or
a priority of aperiodic link disablement is higher than a priority of the aperiodic wakeup request, and the priority of the aperiodic wakeup request is higher than a priority of periodic link disablement; or
a priority of aperiodic link disablement is higher than a priority of the periodic target wakeup, and the priority of the periodic target wakeup is higher than a priority of periodic link disablement.

39. The apparatus according to claim 38, wherein the priority of the link disablement is higher than the priority of the aperiodic wakeup request; and
the power state determining unit is specifically configured to: when the first access point receives the aperiodic wakeup request in an effective period of the link disablement, maintain, by the first access point, a doze state in the effective period of the link disablement, and switch to an awake state after an end time of the link disablement, wherein the doze state does not allow the first access point to perform receiving/sending, and the awake state allows the first access point to perform receiving/sending.

40. The apparatus according to claim 38, wherein the priority of the link disablement is higher than the priority of the periodic target wakeup; and
the power state determining unit is specifically configured to maintain, by the first access point, a doze state in an effective period of the link disablement when the first access point performs an operation of the periodic target wakeup in the effective period of the link disablement.

41. The apparatus according to claim 38, wherein the priority of the aperiodic wakeup request is higher than the priority of the periodic target wakeup; and
the power state determining unit is specifically configured to: when the aperiodic wakeup request is received in a period other than a service period corresponding to the periodic target wakeup, switch, by the first access point, to an awake state in response to the received aperiodic wakeup request.

42. The apparatus according to claim 38, wherein the priority of the link disablement is higher than the priority of the aperiodic wakeup request, and the priority of the aperiodic wakeup request is higher than the priority of the periodic target wakeup; and
the power state determining unit is specifically configured to: maintain, by the first access point, a doze state in an effective period of the link disablement when the operations of the link disablement, the aperiodic wakeup request, and the periodic target wakeup simultaneously exist; or switch, by the first access point, to an awake state in response to the received aperiodic wakeup request when the link disablement does not exist and when the aperiodic wakeup request is received in a period other than a service period corresponding to the periodic target wakeup.

43. The apparatus according to claim 38, wherein the priority of the aperiodic link disablement is higher than the priority of the aperiodic wakeup request, and the priority of the aperiodic wakeup request is higher than the priority of the periodic link disablement; and
the power state determining unit is specifically configured to: maintain, by the first access point, a doze state in an effective period of the aperiodic link disablement when the first access point receives the aperiodic wakeup request in the effective period of the aperiodic link disablement; or switch, by the first access point, to an awake state in response to the received aperiodic wakeup request when the first access point receives the aperiodic wakeup request in an effective period of the periodic link disablement.

44. The apparatus according to claim 38, wherein the priority of the aperiodic link disablement is higher than the priority of the periodic target wakeup, and the priority of the periodic target wakeup is higher than the priority of the periodic link disablement; and
the power state determining unit is specifically configured to: maintain, by the first access point, a doze state in an effective period of the aperiodic link disablement when the first access point performs an operation of the periodic target wakeup in the effective period of the aperiodic link disablement; or when the first access point performs an operation of the periodic target wakeup in an effective period of the periodic link disablement, switch, by the first access point, to an awake state at a start time of the periodic target wakeup, and switch to a doze state at an end time of the periodic target wakeup.

45. The apparatus according to any one of claims 36 to 44, wherein the first access point is not allowed to send one or more of a beacon frame, a probe response frame, an association response frame, a multicast data frame, or a multicast management frame.

46. The apparatus according to any one of claims 36 to 45, wherein the power state determining unit is further configured to send a reduced neighbor report element, wherein a target beacon transmission time information field corresponding to the first access point in the reduced neighbor report element is set to a first value, and a target beacon transmission time information length is set to a second value, so that a legacy station ignores the first access point.

47. The apparatus according to any one of claims 36 to 46, wherein the power state determining unit is further configured to: receive the aperiodic wakeup request, wherein the aperiodic wakeup request is used to wake up the first access point in the power save mode; and switch the first access point from the doze state to the awake state; or switch the first access point from the doze state to the awake state when entering the service period.

48. The apparatus according to any one of claims 36 to 47, wherein the power state determining unit is further configured to send a first physical layer protocol data unit PPDU, wherein the first PPDU carries first indication information, the first indication information indicates a power management mode that the first access point is in, and the power mode comprises the power save mode.

49. The apparatus according to claim 48, wherein the first indication information is a power management field, and the power management field occupies 1 bit.

50. The apparatus according to any one of claims 36 to 49, wherein the power state determining unit is further configured to send a second PPDU, wherein the second PPDU carries a media access control header field, the media access control header field carries second indication information, and the second indication information indicates that the first access point is in the power save mode.

51. The apparatus according to any one of claims 36 to 50, wherein the power state determining unit is further configured to send a power save multi-link element, wherein the power save multi-link element comprises a wakeup delay field and/or a start time field of entering the power save mode, the wakeup delay field indicates a time required for switching the first access point from the doze state to the awake state, and the start time field indicates a time at which the first access point enters the power save mode.

52. The apparatus according to any one of claims 36 to 51, wherein the power state determining unit is further configured to receive a third PPDU, wherein the third PPDU carries third indication information, and the third indication information indicates that a first station or a second access point supports a power save operation of the first access point, or the third indication information indicates that a first station or a second access point does not support a power save operation of the first access point.

53. The apparatus according to any one of claims 36 to 52, wherein the power state determining unit is further configured to send a traffic identifier-to-link mapping element if the first access point is not in a mode of the link disablement, wherein the traffic identifier-to-link mapping element comprises fourth indication information, and the fourth indication information indicates that a second station is allowed to perform transmission through an enhanced distributed channel, or the fourth indication information indicates that a second station is not allowed to perform transmission through an enhanced distributed channel.

54. A power state determining apparatus, comprising a mode determining unit and a power state determining unit, wherein
the mode determining unit is configured to determine that a first access point of an access point multi-link device is in a power save mode; and
the power state determining unit is configured to determine a power state of the first access point based on a priority sequence of different operations when the first access point is in the power save mode, wherein the operations comprise one or more of link disablement, aperiodic wakeup, and periodic target wakeup.

55. The apparatus according to claim 54, wherein the periodic target wakeup is periodic target wakeup in the power save mode.

56. The apparatus according to claim 54 or 55, wherein the priority of the link disablement is higher than the priority of the aperiodic wakeup request; or
a priority of the link disablement is higher than a priority of the periodic target wakeup; or
a priority of the aperiodic wakeup request is higher than a priority of the periodic target wakeup; or
a priority of aperiodic link disablement is higher than a priority of the aperiodic wakeup request, and the priority of the aperiodic wakeup request is higher than a priority of periodic link disablement; or
a priority of aperiodic link disablement is higher than a priority of the periodic target wakeup, and the priority of the periodic target wakeup is higher than a priority of periodic link disablement.

57. The apparatus according to claim 56, wherein the priority of the link disablement is higher than the priority of the aperiodic wakeup request; and
the power state determining unit is specifically configured to: when the first access point is in an effective period of the link disablement and the aperiodic wakeup request is sent to the first access point, maintain, by the first access point, a doze state in the effective period of the link disablement, and switch to an awake state after an end time of the link disablement, wherein the doze state does not allow the first access point to perform receiving/sending, and the awake state allows the first access point to perform receiving/sending.

58. The apparatus according to claim 56, wherein the priority of the link disablement is higher than the priority of the periodic target wakeup; and
the power state determining unit is specifically configured to maintain, by the first access point, a doze state in an effective period of the link disablement when the first access point performs an operation of the periodic target wakeup in the effective period of the link disablement.

59. The apparatus according to claim 56, wherein the priority of the aperiodic wakeup request is higher than the priority of the periodic target wakeup; and
the power state determining unit is specifically configured to: switch, by the first access point, to an awake state in response to the aperiodic wakeup request when the aperiodic wakeup request is sent to the first access point in a period other than a service period corresponding to the periodic target wakeup.

60. The apparatus according to claim 56, wherein the priority of the link disablement is higher than the priority of the aperiodic wakeup request, and the priority of the aperiodic wakeup request is higher than the priority of the periodic target wakeup; and
the power state determining unit is specifically configured to: maintain, by the first access point, a doze state in an effective period of the link disablement when the operations of the link disablement, the aperiodic wakeup request, and the periodic target wakeup simultaneously exist; or switch, by the first access point, to an awake state in response to the aperiodic wakeup request when the link disablement does not exist and when the aperiodic wakeup request is sent to the first access point in a period other than a service period corresponding to the periodic target wakeup.

61. The apparatus according to claim 56, wherein the priority of the aperiodic link disablement is higher than the priority of the aperiodic wakeup request, and the priority of the aperiodic wakeup request is higher than the priority of the periodic link disablement; and
the power state determining unit is specifically configured to: maintain, by the first access point, a doze state in an effective period of the aperiodic link disablement when the first access point in the effective period of the aperiodic link disablement and the aperiodic wakeup request is sent to the first access point; or switch, by the first access point, to an awake state in response to the aperiodic wakeup request when the first access point is in an effective period of the periodic link disablement and the aperiodic wakeup request is sent to the first access point.

62. The apparatus according to claim 56, wherein the priority of the aperiodic link disablement is higher than the priority of the periodic target wakeup, and the priority of the periodic target wakeup is higher than the priority of the periodic link disablement; and
the power state determining unit is specifically configured to: maintain, by the first access point, a doze state in an effective period of the aperiodic link disablement when the first access point performs an operation of the periodic target wakeup in the effective period of the aperiodic link disablement; or when the first access point performs an operation of the periodic target wakeup in an effective period of the periodic link disablement, switch, by the first access point, to an awake state at a start time of the periodic target wakeup, and switch to a doze state at an end time of the periodic target wakeup.

63. The apparatus according to any one of claims 54 to 62, wherein the power state determining unit is further configured to receive a reduced neighbor report element, wherein a target beacon transmission time information field corresponding to the first access point in the reduced neighbor report element is set to a first value, and a target beacon transmission time information length is set to a second value, so that a legacy station ignores the first access point.

64. The apparatus according to any one of claims 54 to 63, wherein the power state determining unit is further configured to send the aperiodic wakeup request, wherein the aperiodic wakeup request is used to wake up the first access point in the power save mode.

65. The apparatus according to any one of claims 54 to 64, wherein the power state determining unit is further configured to receive a first physical layer protocol data unit PPDU, wherein the first PPDU carries first indication information, the first indication information indicates a power management mode that the first access point is in, and the power mode comprises the power save mode.

66. The apparatus according to claim 65, wherein the first indication information is a power management field, and the power management field occupies 1 bit.

67. The apparatus according to any one of claims 54 to 66, wherein the power state determining unit is further configured to receive a second PPDU, wherein the second PPDU carries a media access control header field, the media access control header field carries second indication information, and the second indication information indicates that the first access point is in the power save mode.

68. The apparatus according to any one of claims 54 to 67, wherein the power state determining unit is further configured to receive a power save multi-link element, wherein the power save multi-link element comprises a wakeup delay field and/or a start time field of entering the power save mode, the wakeup delay field indicates a time required for switching the first access point from the doze state to the awake state, and the start time field indicates a time at which the first access point enters the power save mode.

69. The apparatus according to any one of claims 54 to 68, wherein the power state determining unit is further configured to send a third PPDU, wherein the third PPDU carries third indication information, and the third indication information indicates that a first station of a non-access point multi-link device supports a power save operation of the first access point, or the third indication information indicates that the first station does not support a power save operation of the first access point.

70. The apparatus according to any one of claims 54 to 69, wherein the power state determining unit is further configured to receive a traffic identifier-to-link mapping element, wherein the traffic identifier-to-link mapping element comprises fourth indication information, and the fourth indication information indicates that a second station of the non-access point multi-link device is allowed to perform transmission through an enhanced distributed channel, or the fourth indication information indicates that a second station is not allowed to perform transmission through an enhanced distributed channel.

71. A communication apparatus, comprising a processor, wherein the processor is coupled to a memory;
the memory is configured to store a computer program; and
the processor is configured to execute the computer program stored in the memory, so that the apparatus performs the method according to any one of claims 1 to 35.

72. A computer-readable storage medium, comprising a computer program or instructions, when the computer program or the instructions are run on a computer, the method according to any one of claims 1 to 35 is performed.

73. A communication system, comprising an access point multi-link device that performs the method according to any one of claims 1 to 18 and a non-access point multi-link device that performs the method according to any one of claims 19 to 35.

74. A computer program product, comprising a computer program or instructions, wherein when the computer program or the instructions are run on a computer, the method according to any one of claims 1 to 35 is performed.

75. A chip system, wherein the chip system comprises:
a processor and a memory, wherein the processor is coupled to the memory, the memory is configured to store a program or instructions, and when the program or the instructions are executed by the processor, the method according to any one of claims 1 to 35 is implemented.
